(19) Europäisches Patentamt / European Patent Office / Office européen des brevets

(11) EP 2 426 421 B1

## (12) EUROPEAN PATENT SPECIFICATION

(45) Date of publication and mention
of the grant of the patent:
**06.06.2018 Bulletin 2018/23**

(21) Application number: **10769912.6**

(22) Date of filing: **27.04.2010**

(51) Int Cl.:
*F24D 3/10* *(2006.01)*    *F24D 19/10* *(2006.01)*
*F16K 7/12* *(2006.01)*    *G05D 23/19* *(2006.01)*

(86) International application number:
**PCT/KR2010/002624**

(87) International publication number:
**WO 2010/126267 (04.11.2010 Gazette 2010/44)**

(54) **APPARATUS FOR AUTOMATICALLY CONTROLLING A CONSTANT FLOW BY CONSIDERING A HEATING LOAD**

VORRICHTUNG ZUR AUTOMATISCHEN REGELUNG EINES KONSTANTEN FLUSSES UNTER BERÜCKSICHTIGUNG EINER HEIZLAST

APPAREIL DE REGULATION AUTOMATIQUE POUR UN DEBIT CONSTANT EN FONCTION DE LA CHARGE DE CHAUFFAGE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **29.04.2009 KR 20090037729**

(43) Date of publication of application:
**07.03.2012 Bulletin 2012/10**

(73) Proprietor: **Semsystem Co., Ltd.
Gyeonggi-do 421-808 (KR)**

(72) Inventor: **YANG, Chang Chil
Goyang-si
Gyeonggi-Do 410-350 (KR)**

(74) Representative: **Zech, Stefan Markus et al
Meissner Bolte Patentanwälte
Rechtsanwälte Partnerschaft mbB
Postfach 86 06 24
81633 München (DE)**

(56) References cited:
**EP-A2- 1 862 878        DE-A1- 4 019 503
JP-A- 9 310 869          KR-A- 20080 100 006
KR-B1- 100 310 330        KR-B1- 100 409 158
US-A- 5 119 988**

Description

## TECHNICAL FIELD

The present invention relates to an apparatus for automatically controlling a constant flow by considering a heating load, which calculates the amount of heat required for the optimum heating of each room by considering heating loads for each room, discovers the optimum flow value in proportion to the calculated amount of heat, and reduces the total flow value of the household by the optimum flow value corresponding to the room for which heating is stopped, to thereby reduce fuel costs in proportion to the saved flow value, and to decrease noise of a tube due to caviation.

## BACKGROUND

A heating system used in an apartment house or a large building may include an individual heating system which uses the fluid heated by a heat source such as a boiler separately installed on a individual household, and a communal heating system which uses the fluid heated by a heat source installed outside a household and supplied to individual household wherein the communal heating system includes a central heating system which uses a heating source such as a central boiler installed inside an apartment house belt or a large building and a regional heating system which uses a heating source such as a regional power plant outside the apartment house belt.

In these heating systems, water may be generally used as a heating medium and specially the communal heating system may be provided with a circulation system which is configured for circulating warm water such that the warm water heated through a heating source is supplied from a central supply tube to a supply tube branched to the respective household and then the warm water is supplied for heating the respective household through a warm water distribution device installed on each household and including a warm water supply header, a plurality of warm water duct, a warm water returning header and a water returning header, and thereafter the warm water which is supplied through the water returning pipes of the respective household is collected to a central water returning tube and returned to the heating source.

Such a heating system is already disclosed in EP 1 862 878.

In a prior warm water distribution device, as described in Korean Utility Model registration No. 371794, which was filed by the same applicant as this application, a constant flow valve is provided on a water returning pipe connected to a warm water returning header to limit a total constant flow per household and the total constant flow is a summation of flows in the water returning pipe flowing the respective room.

At this time, a driver may be provided on the respective water returning pipe and thus the returning pipe is opened and closed depending on a setting temperature of each room and thereby to maintain a constant temperature at each room.

However, in the prior warm water distribution device as described above, when a total constant flow of a constant flow valve is once set when the constant flow valve is installed, it cannot be re-set to change the total constant flow and thus the setting constant flow may flow through the constant flow valve, and as a result even though the room not necessary to be heated is closed by the driver, much more flow than the setting flow to be originally flowed flows further rapidly through a water returning pipe installed in another room being heated. (Referring to a formula, flow (Q) = sectional area X flow velocity (AV). As a result, in consideration of the water returning pipe which is now heating a room even though the flow increases, a flow velocity is great and thus sufficient heat is not exchanged between a room and a fluid not to save a heating cost though heating area decreases, and thereby to decrease a heating efficiency.

Specially, when more than one room stop being heated, as the flow velocity increases in the water returning pipe which is heating a room, a cavitation (cavity phenomenon) occurs to induce a water hammering phenomenon in which when a fluid flows, the fluid hammers an inner side of the pipe, thereby to make a noise.

Furthermore, in another warm water distribution device, as described in Korean Patent Registration No. 635107, a differential pressure flow adjusting valve is provided for constantly maintaining a differential pressure between a supply pipe and a water returning pipe based on a fluid pressure difference inside the supply pipe and the water returning pipe.

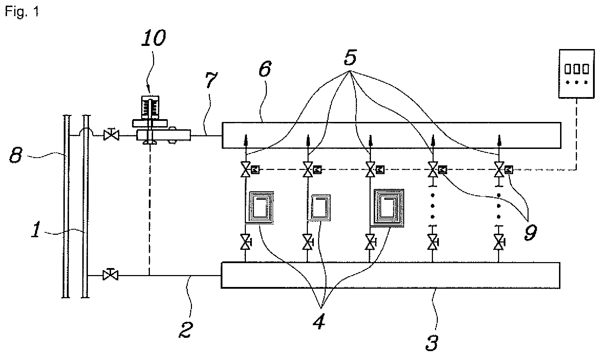

FIG. 1 is a block diagram showing a prior warm water distribution device provided with a prior differential pressure flow adjusting valve.

As shown in FIG. 1, the warm water distribution device includes a warm water supply header 3 connected to a supply pipe 2 branched from a center supply pipe 1, a plurality of warm water ducts 4 branched from the warm water supply header 3 to each room and supplying heat thereto, a water returning pipe 5 which is communicated with the respective warm water duct 4, a warm water returning header 6 to which the plurality of water returning pipes 5 are connected in a one point, a water returning pipe 7 to which the water returning header 6 is connected, and a central water returning pipe 8 to which the water returning pipe 7 is connected in a one point.

Herein, a differential pressure flow adjusting valve 10 to be operated by a fluid pressure difference between a water returning pipe 7 and a supply pipe 2 may be provided on the water returning pipe 7 so that when one room is closed by the driver 9, the fluid velocity toward another room may not increase.

However, since the differential pressureflow valve 10 is operated mechanically by using a difference pressure, a total constant fluid is not controlled actively and also flow is not controlled properly, and further since a constant fluid of a fluid actually flowing through the differential pressureflow adjusting vale cannot be known, a constant flow valve has to be provided separately.

Furthermore, since a total constant fluid for a household is not controlled properly in proportion to the heating-stop rooms, the heating efficiency decrease and noise caused from cavitation, which are initially mentioned, are confirmed to remain from experimental results when one or more rooms are heating-stopped.

As a result, recently, a heating device has been introduced to save fuel cost and prevent fluid velocity increase and thus pre-avoid cavitation occurrence, in which one room is heating-stopped, a controller senses the heating stop and allows the flow adjusting valve to reduce the total constant fluid by the amount of the fluid flowing through the heating-stop room.

The controller in the heating device controls a flow value of the flow adjusting valve according to the following two methods.

According to the first method, a controller senses whether a driver of branch pipe valve is opened and closed, calculates "open valve number rate" which refers to a number rate of open branch pipe valve among a total branch pipe valve numbers, and uniformly controls the flow adjusting valve as the flow corresponding to the open branch pipe valve number.

According to the flow control method by calculating the "open valve number rate", for example in case of a house having 4 rooms, when 2 room indoor temperatures reach a desired temperature and thus 2 drivers among 4 drivers are closed, it is controlled to uniformly supply 50 flow, assuming that a total constant fluid is 100. The flow control method may be applied to rooms having same area and same heating load. However, since the rooms practically have different area and have different heating load even in case of having same room area, the request heating amounts necessary for heating the rooms (hereinafter, referred to as "necessary request heating amount") are different from each other and thus an error greatly becomes larger when uniformly controlling the total constant fluid by the valve open number of a driver. As a result, an optimum heating cannot be performed and further over-flow or low-flow of a fluid may be made into a room in which a driver is opened, thereby to produce cavitation and decrease the heating efficiency.

Meanwhile, according to the second method, in consideration of a branch pipe length in proportion to a room area, the controller senses the opened branch pipe valves all, calculates a branch pipe open length value by summating all the respective lengths of the warm water branch pipes on which the opened branch valves are installed, calculates the "open valve length rate" which refers to the branch pipe open length value among a branch pipe total length value made by summating the respective length values of a total warm water branch pipes, and controls the flow adjusting valve as the flow value corresponding to the open valve length rate.

The control method according to the open valve length rate is a further advanced control method and is performed by considering actually different room sizes, comparing with the control method according to the open valve number rate. However, the control method by the open valve length rate neglects the facts of rooms having different heating loads even in case of same area and thus the flow is not supplied enough to provide the necessary request heat amount of the corresponding room.

For reference, even in case of same room area, the heating loads for the room may be different when considering the numbers of windows provided in the room and whether the room is fabricated with external walls through which heat is exchanged sufficiently with outer air, which causes different loss heating amounts, and thus the necessary request heating amounts for an optimum heating may be different.

That is, even though a conceptual approach has been made about the total constant fluid control in the heating device and thus the total constant fluid seems to be controlled effectively, the heating load which is an important factor when designing the heating system is not considered at all and thus a fluid supply proper for the necessary request heating amount depending on different heating load is not made. Accordingly, as shown in a comparison table to the present invention, which will be described later, the optimum heating system is not implemented due to the wide range of error between the necessary request heating amount and the supplying flow.

Since the heating load is not considered at all while installing the heating device in a house, the standard of "indoor supply temperature -indoor water returning temperature = 15°C" as a regional heating design criteria is not satisfied.

The design criteria has to be met for installing a heating device wherein the Korea Housing Corporation design criteria 99 page, 2009 is the followings.

2)Regional heating criteria

a)Temperature condition

(1)first side supply temperature : 115°C
(2)first side water returning temperature : 50°C
(3)indoor supply temperature : 60°C
(4)indoor water returning temperature : 45°C
(5)external air temperature : applying to the external temperature of the corresponding region of the energy save design criteria for a building
(6)indoor temperature : 20°C

b) pipe design

(1) temperature for calculating flow

(i) heating water (first side): t1=115°C, t2=50°C
(ii) heating water (second side): t1=60°C, t2=45°C
(iii) hot water service (first side): t1=75°C, t2=40°C

(2) pipe diameter

(i) pipe friction resistance : first side: 200mmAq/m second side: 10mmAq/m
(ii) fluid velocity : less than 1.5m/s
(iii) pipe diameter selection(first side): according to "the heating load criteria per pipe diameter table" of Korea regional heating corporation
(iv) pipe diameter selection (second side): referring to X chapter, 13-13 water flow table

Herein, the indoor supply temperature has to be 60°C and the indoor returning water has to be 45°C wherein even though warm water is supplied at 60°C, the indoor returning temperature cannot be 45°C, without considering the heating load, which may be caused from large variation of heat loss depending on the heating load and. The heating device installment not meeting the design criteria is decided not to be proper.

## DISCLOSURE

## TECHNICAL PROBLEM

The present invention has been proposed to solve the drawbacks and an object of the present invention is to provide an apparatus for automatically controlling a constant flow by considering the heating load in which a total constant flow per household is actively and proportionally controlled, corresponding to whether each room is heated and not heated, and in a case where some rooms are not heated, a total constant flow is reduced by as much as flow flowing the rooms eventually to save heating cost by increasing heating efficiency and solve noise problem due to cavitation.
Another object of the present invention is to provide an apparatus for automatically controlling a constant flow by considering the heating load in which when a total constant flow is controlled, corresponding to whether a room is heated and not heated, the total constant flow is controlled to reduce by as much as the necessary request heat amount for each room thereby to always maintain an optimum heating.

## TECHNICAL SOLUTION

In order to achieve the above object, the present invention provides an apparatus for automatically controlling a constant flow by considering heating load, comprising a supply tube through which warm water is supplied to each household; warm water ducts which are communicated with the supply tube and are branched to each room respectively, and allow the latent heat of the warm water to be heat-exchanged with the corresponding room; water returning pipes which are communicated with the warm water ducts respectively and to which the heat exchanged warm water is returned; a water returning tube to which flows of the water returning pipes are collected and through which the collected flows are discharged outside; temperature adjusting portions which are installed in each room to set desired temperatures for the rooms and measure an indoor temperature of each room; drivers which are installed respectively in the water returning pipes and each of the drivers opens and closes a passage of the corresponding water returning pipe according to an electrical signal; a variable flow valve which is installed in the supply tube or the water returning tube and varies the flow of the supply tube or the water returning tube according to another electrical signal; and

4

a controller which receives the signal from the temperature adjusting portion of each room and controls both the driver of each respective room and the variable flow valve,

wherein the controller stores an optimum flow value for each room determined on the basis of the necessary request heat amount of the corresponding room in consideration of heating load per room,

wherein, in response to a signal from the temperature adjusting portion of a room where heating has to be stopped, the controller controls the corresponding driver in order to close the passage of the water returning pipe of the corresponding room,

whereby the flow through the variable flow valve is reduced in proportion to the ratio of the stored optimum flow value of the closed room to a summation of the stored optimum flow values of all the rooms.

Here, the heating load to be stored in the controller is obtained by summating all "face load amount" on the respective face forming the room wherein the face load amount is obtained by multiplying at least one factors among "heat transmission rate, area, azimuth coefficient, and relevant temperature difference".

The variable flow valve according to a first embodiment comprises: a body in which a fluid path through which an entrance and an exit are communicated is provided and in which a sheet is formed between the entrance and the exit with decreasing a sectional area of the fluid path; a chamber in which a hydraulic pressure passage is formed in one inner side of the body, which is applied by the entrance side hydraulic pressure and the exit side hydraulic pressure; a diaphragm which partitions the chamber and is applied both sides by the entrance side hydraulic pressure and the exit side hydraulic pressure, and is deformed by the pressure difference of the entrance and the exit; a moving body which is connected to one side of the diaphragm and is resiliently installed to adjust a sectional area passing from the sheet toward the exit by the pressure difference in the chamber; and an actuator which adjusts on the other side of the body an opening amount of the sheet by a control signal from the controller.

At this time, the moving body comprises: a head portion which is connected to the diaphragm; a stem portion which is extended from the head portion toward the sheet and adjusts a sectional area of a flow passing from the sheet toward the exit; and a resilient member which is installed between the moving body and the chamber so that the moving body is returned when pressures of both sides are equal based on the diaphragm.

The variable flow valve according to a second embodiment comprises: a body in which a fluid path through which an entrance and an exit (are communicated is provided and in which a sheet is formed between the entrance and the exit with decreasing a sectional area of the fluid path; a chamber in which a hydraulic pressure passage is formed in one inner side of the body, which is applied by the entrance side hydraulic pressure and the exit side hydraulic pressure; a diaphragm which partitions the chamber and is applied both sides by the entrance side hydraulic pressure and the exit side hydraulic pressure, and is deformed by the pressure difference of the entrance and the exit; a moving body which is connected to the diaphragm and moves to reduce a flow sectional area of an inflection portion passing from the entrance side toward the sheet side when a pressure in the sheet side is greater than that in the exit side; and an actuator which adjusts an opening amount of the sheet by a control signal from the controller.

At this time, an outer peripheral surface of the diaphragm is fixed to an inner wall of the chamber and on an inner peripheral surface of the diaphragm a through portion to which the moving body is connected is formed.

Further, the moving body comprises: a head portion which is fitted into the through portion of the diaphragm; a stem portion which is extended from the head portion to the inflection portion through which the entrance side and the sheet side are communicated to adjust a sectional area of a flow passing through the inflection portion according to a deformation of the diaphragm; and a resilient member which is installed on the moving body so that the moving body is returned when pressures of both sides are equal based on the diaphragm.

Furthermore, an adjusting screw is provided in the inflection portion to adjust initially passing flow by adjusting an interval from the step portion.

The variable flow valve according to a third embodiment comprises: a body in which a fluid path through which an entrance and an exit are communicated is provided and in which a sheet is formed between the entrance and the exit with decreasing a sectional area of the fluid path; a flow sensor which is installed on the fluid path and measures a flow of a fluid passing the fluid path; and an actuator which adjusts an opening amount of the sheet by a control signal from the controller.

Here, the flow sensor comprises: a housing which is installed on the fluid path and inside which a through hole is formed; a magnetic portion which is installed in a predetermined space along a circumferential direction of the through hole; and an impeller which is installed rotatively in the through hole wherein when a rotation velocity of the impeller is varied according to the flow passing through the fluid path, the magnetic portion detects the rotation velocity to transmit it to the controller.

The actuator comprises: a driving main body which is connected electrically to the controller and converts the electric signal from the controller (into kinetic force; and a moving rod which is extended from the driving main body to be inserted into the body and moves toward the sheet to adjust an opening amount of the sheet.

The driving main body comprises: a driving motor which is connected electrically to the controller to produce a driving force; a driving gear which transmits the driving force produced from the driving motor to the moving rod; and a variable resistor which is link-moved with the driving gear to sense a displacement amount of the moving rod and feedbacks the sensed displacement amount to the controller.

The variable flow valve according to a fourth embodiment comprises: a body inside which a fluid path through which the entrance and the exit are communicated is provided; a chamber which is partitioned inside the body by the upper and lower support rods and is communicated with the entrance and the exit of the body; a diaphragm one end of which is fixed to the lower support rod of the chamber and the other end of which is fixed to a slider connected to the resilient member provided inside the chamber, and which partitions the chamber into a first hydraulic pressure chamber to be communicated with the entrance of the body and a second hydraulic pressure chamber to be communicated with the exit of the body; and an actuator which is installed movably along the upper support rod of the chamber and adjusts a sectional area passing from the entrance of the body toward the chamber by a control signal from the controller.

Here, the resilient member is fitted between a guide protrusion to which the slider is mounted movably and the moving rod and is elastically biased by the slider when the diaphragm is deformed by a pressure difference between the first hydraulic pressure chamber and the second hydraulic pressure chamber.

At this time, the actuator comprises: a driving main body which is connected electrically to the controller and converts an electric signal from the controller into a kinetic force; a moving rod which is moved reciprocally on the driving main body and a lower end of which a plurality of screw threads are formed; and a flow blocking body which is connected to the screw thread of the moving rod and is moved vertically along the upper support rod when the moving rod is rotated, thereby to adjust a sectional area passing from the entrance of the body toward the chamber.

The actuator according another embodiment comprises: a driving main body which is connected electrically to the controller and converts an electric signal from the controller into a kinetic force; a moving rod which is installed rotatively on the driving main body and a lower end of which a plurality of screw threads are formed; and a flow blocking body which is connected to the screw thread of the moving rod and is moved vertically along the upper support rod when the moving rod is moved reciprocally, thereby to adjust a sectional area passing from the entrance of the body toward the chamber.

Here, the driving main body comprises: a driving motor which is connected electrically to the controller to produce a driving force; a driving gear which transmits the driving force produced from the driving motor to the moving rod; and a variable resistor which is link-moved with the driving gear to sense a displacement amount of the moving rod and feedbacks the sensed displacement amount to the controller.

## ADVANTAGEOUS EFFECTS

As set forth above, according to the present invention, when there occurs a heating-stop room, a total constant flow is controlled automatically to reduce by as much as the flow corresponding to the room and thus over-flow more than a setting amount toward other rooms which are being heated can be avoided, thereby to save heating cost and eliminate noise due to caviation.

Further, when a total constant flow is automatically reduced, corresponding to the heating-stop room, flow meeting the necessary request heating amount of the corresponding room is reduced, thereby to always maintain an optimum heating state.

## BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 is a block diagram showing a warm water distribution device used in a prior differential pressure flow adjusting valve;
FIG. 2 is a view showing a control logic and its configuration according to a preferred embodiment of the present invention;
FIG. 3 is a cross-sectional view showing a variable flow valve according to a first embodiment of the present invention;
FIG. 4 is a cross-sectional view showing a variable flow valve according to a second embodiment of the present invention;
FIG. 5 is a cross-sectional view showing a variable flow valve according to a third embodiment of the present invention;
FIG. 6 is a front view showing a flow sensor used in the variable flow valve used in the third embodiment of the present invention;
FIGS. 7 and 8 are cross-sectional views showing the variable flow valve used in a fourth embodiment of the present invention;
FIG. 9 is a cross-sectional view showing a driving main body used in the present invention;

FIGS. 10-12 are experimental tables of the results which is obtained by comparing the apparatus according to the present invention and a prior differential pressure flow valve with respect to 4 rooms having different fluid amount from each other and which shows reduction differences of a total constant flow of a household, corresponding to the heating-stop room;

FIG. 13 is a table showing parameters of a house in which the device of the present invention is installed; and

FIGS. 14-16 are tables showing heat amount control results according to the prior art, comparing with the present invention.

## BEST MODE

Exemplary embodiments of the present invention will be described below in detail with reference to the accompanying drawings. Wherever possible, the same reference numerals will be used to refer to the same elements throughout the specification, and a duplicated description thereof will be omitted. It will be understood that although the terms "first," "second", etc. are used herein to describe various elements, these elements should not be limited by these terms. These terms are only used to distinguish one element from another element.

## MODE FOR INVENTION

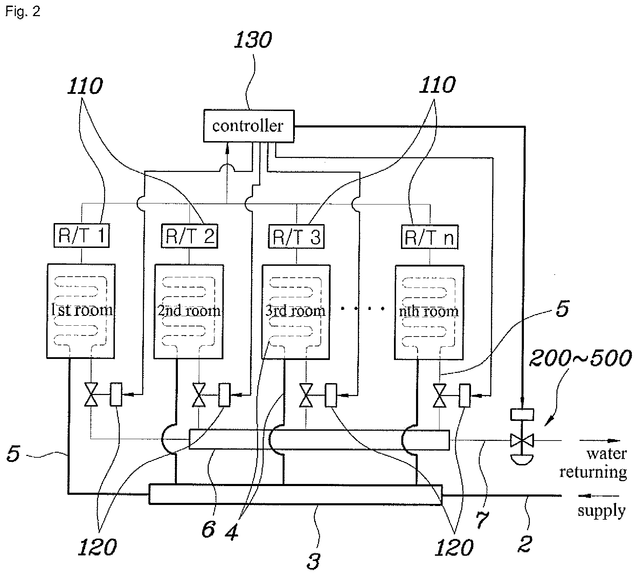

There are provided several rooms having different sizes (first room, second room, third room... nth room) in each household, as show in FIG. 2, wherein assuming for convenience that the first room is largest and room size gradually decrease toward nth room, it is generally inferred that a necessary request heating amount for heating each room is in proportion to a room floor area.

However, the inference that the necessary request heating amount is in proportion to a room floor area is not reasonable theory which neglects a heating load and in case where the heating load is considered while actually designing a heating system, the necessary request heating amount may be varied even in case of the same room floor area, and further the necessary request heating amount of a room having a smaller floor area may be greater than that of a room having a larger floor area.

Accordingly, the heating system may be designed by considering the respective room area and various heat loss caused from a window number and size, a room location according to the design criteria, and calculating the heating load per room and determining the necessary request heating amount depending on the heating load.

The formula for calculating the heating load per room is as followings.

$$L=\sum (K \times A \times N \times \Delta t)------(1)$$

Here, L=heating load
K=heat transmission rate [kcal/hk]
A=area
N=azimuth coefficient
Δt=relevant temperature difference

That is, the heating load per room is calculated by summating all "face heating load" of the respective face forming the room wherein the face heating load is obtained by multiplying one more factors selected among the heat transmission rate, the area, the azimuth coefficient, and the relevant temperature difference. Herein, the formula 1 is an ideal exemplary formula for obtaining the best precise heating load wherein 4 factors (the heat transmission rate, the area, the azimuth coefficient, and the relevant temperature difference) are all selected.

In the formula 1, the heat transmission rate value as one factor for calculating the heating load is associated with material self property forming the room wherein the large heat transmission rate means a large heat loss. For example, the heat transmission rate of a glass window is 4.73 which is greater than 1.38 of a wood window, and thus the heat loss of the glass window is larger than that of the wood window.

Generally, the heat transmission rate is selected depending on the material forming a room, bases on 『heat transmission rate table of a part of a building per region』 made under a installment standard decree 21.

Further, the area value among the factors does not mean a floor area of the corresponding room but all surface areas surrounding the corresponding rooms, and generally a room is a hexahedral shape and thus the area value determined by considering area values of 4 wall faces, a ceiling and a floor.

In addition, the azimuth coefficient among the factors is determined by considering the heat loss difference depending on azimuths of east, west, north and south.

Furthermore, the relevant temperature difference means a temperature difference between an inner face and an outer face based on a one face forming a room (for example, wall face) wherein in case of a outer wall, the heat loss is to be large and as a result the corresponding temperature is to be large.

The best precise heating load is obtained, as indicated in the formula 1, by summating all, "face heating load (heat transmission rate x area x azimuth coefficient x relevant temperature difference)" of each face forming a room, as set forth above, and when one wall face is formed with different materials, the heat transmission rate, area, azimuth coefficient and relevant temperature difference are obtained respectively for the different materials and then summated as the heat transmission rate, area, azimuth coefficient and relevant temperature difference for the wall face.

For example, if a wall face is formed with concrete and a glass window, the heating load of the wall face is obtained by summating a value that the face area excluding the glass window is multiplied by the heat transmission rate, area, azimuth coefficient and relevant temperature difference of a concrete, and a value that a glass window area is multiplied by the heat transmission rate, area, azimuth coefficient and relevant temperature difference of a glass.

Further, for obtaining the wall face heating load the four factors all do not need to be multiplied, if necessary, the selected factors only are to be multiplied. For example, when one wall face is an outer wall, the azimuth coefficient among the factors has to be considered; however, when the wall face is an inner wall, the azimuth coefficient may be excluded to calculate the heating load.

Accordingly, even though a precision degree of the wall face heating load decreases a little bit, only the area has to be considered, only "area x heat transmission rate" has to be considered and at least one of the azimuth coefficient and the relevant temperature difference are additionally considered thereto.

When the heating load is calculated for a room, a necessary request heating amount necessary for optimally heating the room is obtained base on the heating load by using a below formula.

$$Q = G \times C \times \Delta T ------- (formula\ 2)$$

Here, Q = necessary request heating amount[kcal/h]

G = flow[lph]

C = specific heat[kcal/kg°C]

ΔT = temperature variation (indoor supply temperature - indoor water returning temperature)

Herein, the specific heat is a constant value (that is, warm water is used and thus the specific heat is 1), the temperature variation value is a constant value since the temperature variation has to be always kept as 15°C for meeting the design criteria as set forth in the prior art.

Eventually, the necessary request heating amount is in proportion to the flow and thus in order to increase the necessary request heating amount the flow has to be increased wherein when the necessary request heating amount per room is decided, an optimum flow for meeting the necessary request heating amount per room is to be set to calculate the optimum flow per room can be calculated.

The calculated optimum flow value per room is stored to a controller, which will be later described, and used when controlling a flow of a variable flow valve 200-500, which will be later described.

Hereinafter, a basic configuration of an apparatus for automatically controlling a constant flow according to a preferred embodiment of the present invention will be described.

As shown in FIG. 2, the apparatus for automatically controlling a constant flow mainly includes a supply tube 2, a warm water duct 4, a water returning pipe 5, a water returning tube 7, a temperature adjusting unit 110, a driver 120, a variable flow valve 200-500 and a controller 130.

The supply tube 2 is configured for supplying warm water to each household and the warm water duct 4 is communicated with the supply tube 2 and is branched into the respective room where warm water latent heat is exchanged to the corresponding room.

The warm water duct 4 may be directly communicated with the supply tube 2, and generally the supply tube 2 is connected to a warm water supply header 3 and the warm water duct 4 is branched from the warm water supply header 3 into the respective room for respectively heating each room through flowing warm water.

The warm water which has finished heat-exchanging with the respective room is returned through a water returning pipe 5 communicated with the respective warm water duct 4, and the returned warm water is collected again to the warm water returning header 6 and then flows of the water returning pipes 5 are collected on one place through the water returning tube connected to the warm water returning header 6 and are returned to an external central water returning tube (not shown).

According to the present invention, an apparatus for automatically controlling a constant flow is provided to save a heating cost by reducing a total constant flow by as much as corresponding to the flow of actually heating-stop room (already calculated optimum flow) when one or more rooms in a household having the heating system as set forth above are stopped heating, and interrupt noise creation due to cavitation by avoiding more amount of flow than the optimum flow originally set from being flowed into other rooms which are being heated to prevent a flow velocity increase of the water returning pipe which is heating.

Herein, the temperature adjusting unit 110 may be provided on the respective room to separately set a desired temperature for the respective room, though which the desired temperature may be set by a user and further indoor temperature of the respective room may be measured.

Furthermore, an air temperature sensor may be embedded in the temperature adjusting unit 110 and a desired temperature by a user is to be set by rotating a button or an adjusting knob wherein the temperature adjusting unit 110 has been known and thus detailed description thereof is omitted.

The driver 120 may be provided on the water returning pipe 5 of the respective room to respectively open and close the water returning pipes 5 depending on electric signals of the controller 130, which will be described later wherein when the driver 120 opens the water returning pipe 5, warm water can flow through the corresponding room to heat the room, and when the driver closes the water returning pipe 5, warm water cannot flow through the corresponding room to stop the heating.

The driver 120 may be operated by external electric signals wherein a valve inside the water returning pipe 5 is operated by receiving the electric signals to open and close a passage of the water returning pipe 5.

In addition, the variable flow valve 200-500 may be provided in the supply tube 2 or the water returning tube 7 to vary the flow of the supply tube 2 or the water returning tube 7 depending on other electric signals from the controller 130, in which a total constant flow is restricted.

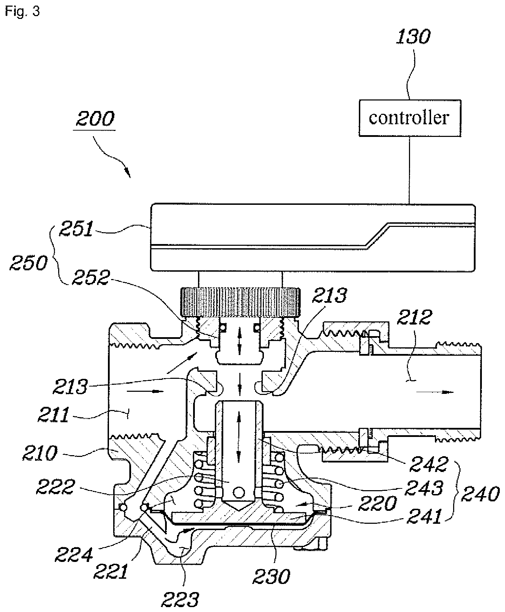

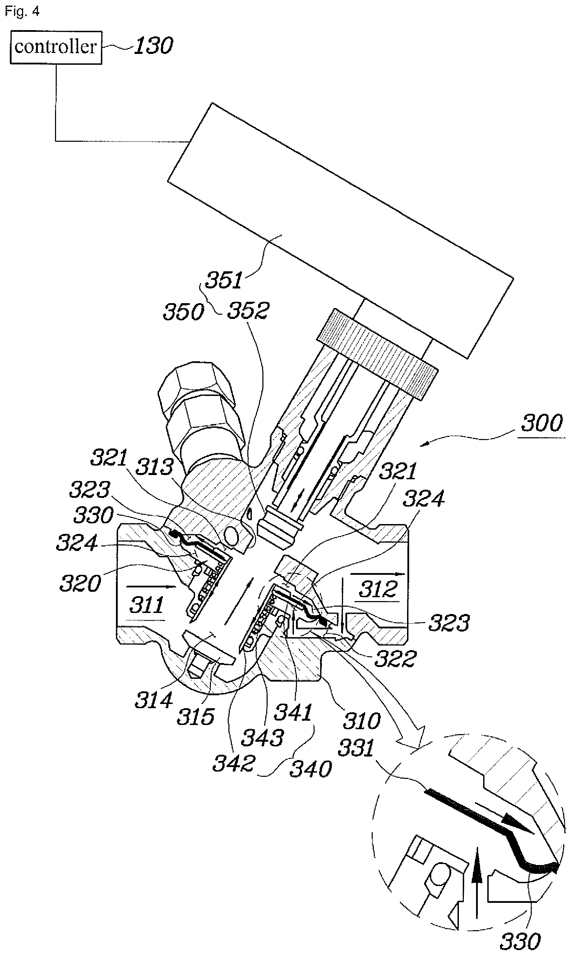

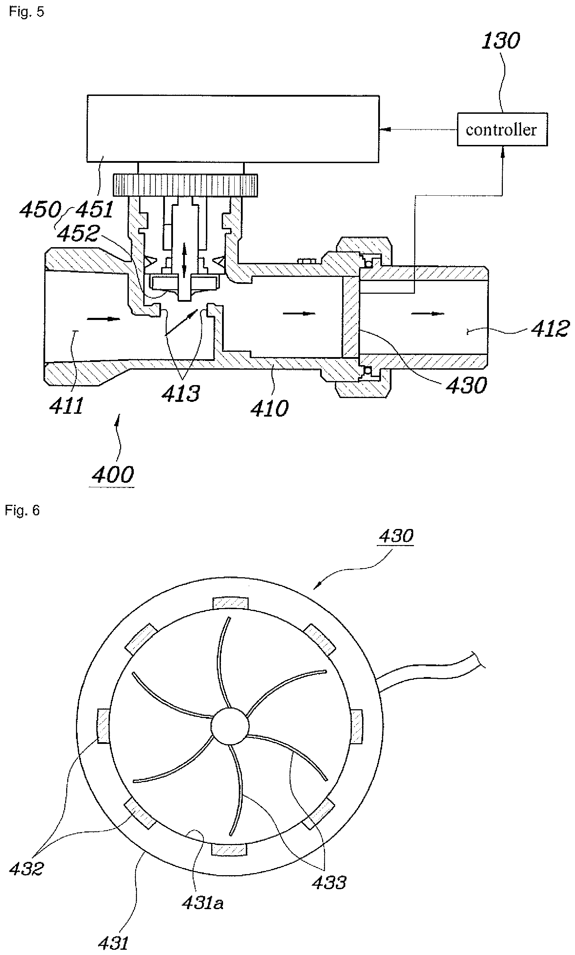

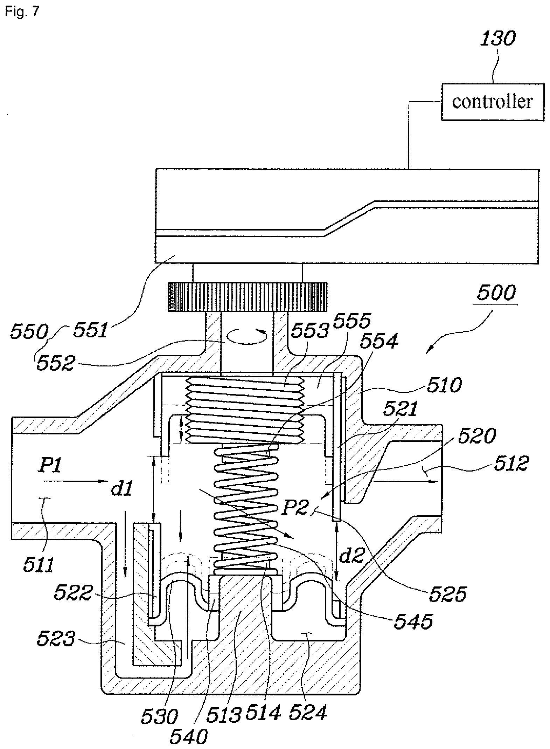

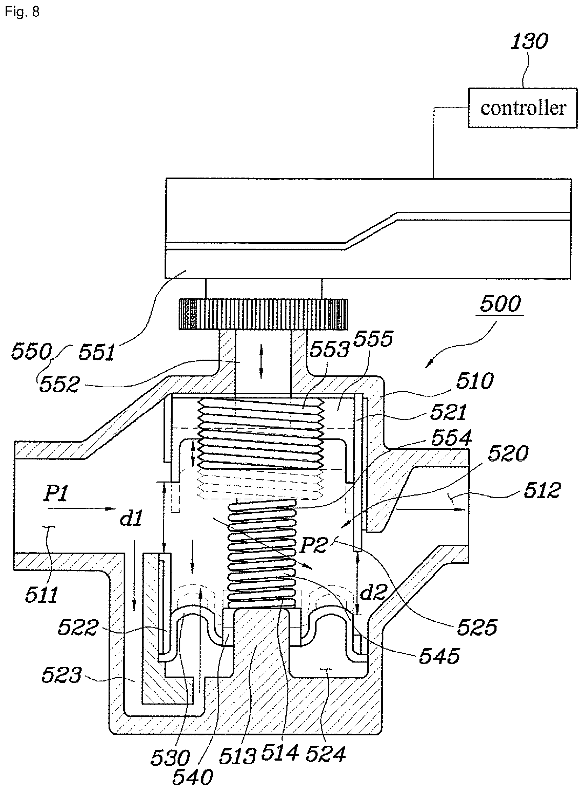

When an electric signal is applied to the variable flow valve 200-500, a flow passage sectional area of the supply tube 2 or the water returning tube 7 (hereinafter, assuming that the variable flow valve 200-500 is provided in the water returning tube 7 for convenience, as shown in drawings) is adjusted to vary flow passing through the water returning tube 7, the configuration of the variable flow valve 200-500 is described in detail according to the embodiments in FIG. 3 (embodiment 1), FIG. 4 (embodiment 2), FIG. 5 (embodiment 3), and FIGS. 7 and 8 (embodiment 4).

First, as shown in FIG. 3, the variable flow valve 200 according to the first embodiment mainly includes a body 210, a chamber 220, a diaphragm 230, a moving body 240 and an actuator 250.

Here, an entrance 211 through which returning fluid is input is formed on inner one side of the body 210 and an exit 212 through which the returning fluid is discharged is formed on the other side thereof wherein a fluid path through which the entrance 211 and the exit 212 are communicated is provided on inner side of the body 210.

Further, sheets 213 are formed between the entrance 211 and the exit 212 of the body 210, which decreases a sectional area of the fluid path, and the fluid entered into the body 210 through the entrance 211 passes through the sheet 213 and discharges outside through the exit 212.

The chamber 220 is a predetermined space formed on one inner side of the body 210 wherein hydraulic pressure passages 221, 222 are formed on the chamber 220 to apply hydraulic pressures toward an entrance 211 side and a sheet 213 side, respectively.

Referring to FIG. 3, a first hydraulic pressure passage 221 to be communicated with an entrance 211 side is formed in the chamber 220 to apply hydraulic pressure toward an entrance 211 side and further a second hydraulic pressure passage 222 to be communicated with a sheet 213 side is formed in the chamber to apply hydraulic pressure toward a sheet 213 side.

Accordingly, a first hydraulic pressure chamber 223 to be communicated with the first hydraulic pressure passage 221 and a second hydraulic pressure chamber 224 to be communicated with the second hydraulic pressure passage 222, which are partitioned by a diaphragm 230, are provided on the chamber 220.

The diaphragm 230 is provided to partition the chamber 220 into the first hydraulic pressure chamber 223 and the second hydraulic pressure chamber 224, which is deformed by a pressure difference when hydraulic pressure applies to both sides of the diaphragm 230 toward an entrance 211 side and a sheet 213 side, respectively.

The moving body 240 is connected to one side of the diaphragm 230 and installed elastically to adjust a sectional area passing from the sheet 213 toward the exit 212 due to a pressure difference in the chamber 220 wherein when the diaphragm 230 is deformed due to the pressure difference of the chamber 220, the moving body 240 approaches toward the sheet 213 due to a deformation force of the diaphragm 230.

Herein, the moving body 240 includes a head portion 241, a stem portion 242 and a resilient member 243 wherein the head portion 241 is connected to the diaphragm 230.

Further, the stem portion 242 is extended from the head portion 241 toward the sheet 213 to adjust the flow sectional area passing from the sheet 213 toward the exit 212 due to a deformation of the diaphragm 230.

Accordingly, when the stem portion 242 is moved due to the deformation of the diaphragm 230 to increase or decrease the sectional area passing from the sheet 213 toward the exit 212 and thereby to lower or raise hydraulic pressure on the sheet side.

Furthermore, the second hydraulic pressure passage 222 to be communicated with the second hydraulic pressure chamber 224 may be formed on the body 210 to communicate with a sheet 213 side; however, in the present invention, the second hydraulic pressure passage 222 is formed inside the stem portion 242.

Accordingly, the second hydraulic pressure chamber 224 is communicated with a sheet 213 side through the second hydraulic pressure 222 formed inside the stem portion 242.

Further, the moving body 240 is to be returned to an initial location, as shown in FIG. 3, while the first hydraulic pressure chamber 223 and the second hydraulic pressure chamber 224 are at same pressure wherein the resilient member 243 is provided between the moving body 240 and the chamber 220.

While a fluid of a predetermined hydraulic pressure is flowing into the body 210, in case where a fluid of higher hydraulic pressure flows at a predetermined moment into the chamber, the hydraulic pressure at an entrance 211 side becomes higher than that of the sheet 213 and thus a pressure of the first hydraulic pressure chamber 223 to be communicated with the entrance 211 becomes higher than that of the second hydraulic pressure chamber 224 to be communicated with the sheet 213. As a result, the pressure of the first hydraulic pressure 223 applies to a side of the second hydraulic pressure chamber 224 due to the pressure difference to deform the diaphragm 230 to be bent toward the second hydraulic pressure chamber 224 and the moving body 240 is to be pushed toward the sheet 213 due to this deformation of the diaphragm 230 so that a distal end of the moving body 240 reduces a sectional area passing from the sheet 213 toward the exit 212.

When the sectional area passing from the sheet 213 toward the exit 212 is reduced, the hydraulic pressure of the sheet 213 gradually increases to be eventually equal to an hydraulic pressure at an entrance 211 side, and when the hydraulic pressures of an entrance 211 side and a sheet 213 side are equal, the pressure of the first hydraulic pressure chamber 223 and the second hydraulic pressure chamber 224 becomes an equilibrium state so that the moving body 240 is returned to an original location due to its resilient force.

Likewise, the chamber 220, the diaphragm 230 and the moving body 240 are configured for the hydraulic pressure at the sides of the entrance 211 and the sheet 213 to be always equal. Here, the reason for maintaining the pressures to be equal is that a sectional area of a flow passing from the entrance 211 toward the sheet 213 is adjusted to control precisely the flow as a desired flow through the equal pressure at the sides of the entrance 211 and the sheet 213.

Meanwhile, while maintaining the equal hydraulic pressure at the sides of the entrance 211 and the sheet 213 through the configuration as set forth above, a flow passing through the sheet is controlled by an actuator 250.

The actuator 250 may be provided on the other side of the body 250 and through which a sectional area passing from the entrance 211 toward the sheet 213 is adjusted due to an electrical signal to control actually the flow wherein the actuator is common element to be used in other embodiments. Herein, the other embodiments are to be described and then the actuator will be described later.

Meanwhile, as shown in FIG. 4, a variable flow valve 300 according to the second embodiment mainly includes a body 310, a chamber 320, a diaphragm 330, a moving body 340 and an actuator 350.

Here, an entrance 311 through which returning fluid is input is formed on inner one side of the body 310 and an exit 312 through which the returning fluid is discharged is formed on the other side thereof wherein a fluid path through which the entrance 311 and the exit 312 are communicated is provided on inner side of the body 310.

Further, sheets 313 are formed between the entrance 311 and the exit 312 of the body 310, which decreases a sectional area of the fluid path, and the fluid entered into the body 310 through the entrance 311 has to pass through the sheet 313 and discharge outside through the exit 312.

The chamber 320 is a predetermined space formed between the entrance 311 and the exit 312 among inner part of the body 310 and in the present embodiment the chamber 320 is formed adjacently to the sheet 313 wherein hydraulic pressure passages 321, 322 are formed on the chamber 320 to apply hydraulic pressures toward an entrance 311 side and a sheet 313 side, respectively.

Referring to FIG. 4, a first hydraulic pressure passage 321 to be communicated with a sheet 313 side is formed in the chamber 320 to apply hydraulic pressure toward a sheet side 313 and further a second hydraulic pressure passage 322 to be communicated with an exit 312 side is formed in the chamber to apply hydraulic pressure toward an exit 312 side.

Accordingly, a first hydraulic pressure chamber 323 to be communicated with the first hydraulic pressure passage 321 and a second hydraulic pressure chamber 324 to be communicated with the second hydraulic pressure passage 322, which are partitioned by a diaphragm 330, are provided on the chamber 320.

The diaphragm 330 is provided to partition the chamber 320 into the first hydraulic pressure chamber 323 and the second hydraulic pressure chamber 324, which is deformed by a pressure difference when hydraulic pressure applies to both sides of the diaphragm 330 toward a sheet 313 side and an exit 312 side, respectively.

Herein, an outer peripheral surface of the diaphragm 330 is fixed to an inner wall of the chamber 320 to be installed in the chamber 320 and a through portion 331 to which a moving body 340, which will be described later, is connected is formed on inner peripheral surface of the diaphragm.

The moving body 340 is connected to the diaphragm 330 and installed elastically to adjust a sectional area of a direction change place (hereinafter, referred to as "inflection portion") among places passing from the entrance 311 toward the sheet 313 due to a pressure difference in the chamber 320 wherein when a pressure at a sheet 313 side is greater than that of an exit 312 side, the moving body 340 is moved by receiving a deformation force from the diaphragm 330 to reduce a sectional area of the inflection portion 314.

Herein, the moving body 340 includes a head portion 341, a stem portion 342 and a resilient member 343 wherein the head portion 341 is fitted into the through portion 331 of the diaphragm 330.

Further, the stem portion 342 is extended from the head portion 341 toward the inflection portion 314 where an entrance 311 side and a sheet 313 side are communicated to adjust the sectional area of the inflection portion 314 passing from the entrance 311 toward the sheet 313 due to a deformation of the diaphragm 330.

Accordingly, when the stem portion 342 is moved due to the deformation of the diaphragm 330, the flow sectional area of the inflection portion 314 is increased or decreased to adjust the flow of the inflection portion 314 depending on a pressure variation and thereby maintain a constant hydraulic pressure at a sheet 313 side.

Further, when the first hydraulic chamber 323 and the second hydraulic chamber 324 are in a same pressure state, the moving body 340 is to be returned to an initial location wherein the resilient member 343 is installed resiliently on the moving body 340 for the moving body 340 to be returned when pressures of both sides are equal based on the diaphragm 330.

Furthermore, an adjusting screw 315 for adjusting initially pass flow passing through the inflection portion 314 by adjusting an interval from the stem portion 342 may be provided on the inflection portion 314.

The adjusting screw 315 is provided to be manually handled when an initial flow is set and once it is handled, it cannot be changed until manually handling the adjusting screw.

In summary, while a fluid of a predetermined hydraulic pressure is flowing into the body 310, in case where a fluid of higher hydraulic pressure flows at a predetermined moment into the chamber, the hydraulic pressure at a side of the sheet 313 becomes higher than that of an exit 312 side and thus a pressure of the first hydraulic pressure chamber 323 to be communicated with a sheet 313 side becomes higher than that of the second hydraulic pressure chamber 324 to be communicated with an exit 312 side. As a result, the pressure of the first hydraulic pressure 323 applies toward the second hydraulic pressure chamber 324 due to the pressure difference to deform the diaphragm 330 to be bent toward the second hydraulic pressure chamber 324 and the moving body 340 is moved toward the inflection portion 314 due to this deformation of the diaphragm 330 so that a distal end of the stem portion 342 reduces a flow sectional area of the inflection portion 314 passing from the entrance 311 toward the sheet 313.

When the flow sectional area of the inflection portion 314 is reduced, the hydraulic pressure of the sheet 313 gradually decreases to be eventually equal to an hydraulic pressure at an exit 312 side, and when the hydraulic pressures of a sheet 313 side and an exit 312 side are equal, the pressure of the first hydraulic pressure chamber 323 and the second hydraulic pressure chamber 324 becomes an equilibrium state so that the moving body 340 is returned to an original location due to its resilient force.

Likewise, the chamber 320, the diaphragm 330 and the moving body 340 are configured for the hydraulic pressures of the sides of the sheet 313 and the exit 312 to be always equal. Here, the reason for maintaining the pressures to be equal is that a sectional area of a flow passing through the sheet 313 is adjusted to control precisely the flow as a desired flow through the equal pressure of the sides of the sheet 313 and the exit 312. If the pressure becomes different, a flow passing through the sheet 313 is varied.

Meanwhile, while maintaining the equal hydraulic pressure at front and rear sides of the sheet 313 through the configuration as set forth above, a flow passing through the sheet is adjusted by the actuator 350 wherein a total flow passing through the water returning tube 7 is eventually adjusted precisely by the actuator 350.

The actuator 350 may be provided on the other side of the body 350 and through which a opening amount of the sheet 313 is adjusted to control actually the flow depending on an electrical signal wherein the actuator 313 adjusts actually a sectional area of the flow passing through the sheet 313 to control the flow. The actuator will be described in detail later.

Meanwhile, as shown in FIG. 5, a variable flow valve 400 according to the third embodiment mainly includes a body 410, a flow sensor 430 and actuator 450.

Here, an entrance 411 through which returning fluid is input is formed on inner one side of the body 410 and an exit 412 through which the returning fluid is discharged is formed on the other side thereof wherein a fluid path through which the entrance 411 and the exit 412 are communicated is provided on inner side of the body 410.

Further, sheets 413 are formed between the entrance 411 and the exit 412 of the body 410, which decreases a sectional area of the fluid path, and the fluid entered into the body 410 through the entrance 411 passes through the sheet 413 and discharges outside through the exit 412.

The flow sensor 430 is provided on the fluid path of the body 410 to directly measure a flow of a fluid passing through the fluid path and in the present embodiment the flow sensor 430 is provided on a side of the exit 412 to measure the flow of the fluid having passed through the sheet 413; however, an arrangement of the flow sensor 430 is not limited thereto, and the flow sensor 430 may be provided on a side of the entrance 411.

The pressure of a fluid on inner fluid path of the body 410 connected to the water returning tube 7 is ever-changed and even though an unit for making the front and rear pressures of the sheet 423 to be equal has been conventionally used to control a constant flow through the actuator 450, which will be described later, under a circumference of pressure continuously being changed, and in the third embodiment of the present invention the flow inside the fluid path is directly measured to adjust in real time a sectional area of the flow depending on the flow variation to control the flow.

Accordingly, when a passing flow on the fluid path which is measured through the flow sensor 430 is great, a flow sectional area of the sheet 413 has to be decreased and when the passing flow is small, the flow sectional area of the sheet 413 has to be increased thereby for a constant flow to be flowed, regardless of flow variation.

As shown in FIG. 6, the flow sensor 430 may include a housing 431, a magnetic portion 432, and an impeller 433 wherein the housing 431 is provided on a fluid path of the body 410, and may be formed with high corrosion-proof material not to be corroded with fluid and further a through hole 431a through which a fluid passes is formed inside the housing 431.

Accordingly, when the housing 431 is provided on the fluid path in a direction of crossing to a flow direction of a fluid, all fluid flowing the fluid path has to pass through the through hole 431a.

The magnetic portion 432 is provided in inner circumferential direction of the through hole 431a and may be provided as a single; however, in the present embodiment of the present invention a plurality of the magnetic portions are provided at a predetermined space along an inner circumferential direction of the through hole 431a in order to prepare for failure or increase a precision degree of the sensor wherein the number of the magnetic portion may be selected depending on necessity of a user.

The impeller 433 is provided rotatively on the through hole 431a wherein the impeller 433 is rotated by receiving a collision energy from a fluid flowing through the fluid path, and the whole impeller 433 is made of metal material or a metal part is provided on a distal end of the impeller 433 so that when the impeller 433 is rotated, the magnetic portion 432 detects rotation number of the impeller 433.

Accordingly, when a vane (blade) of the impeller 433 passes near the magnetic portion 432 during a rotation of the impeller 433, a magnetic flux density of the magnetic portion 432 is varied and thus a voltage is produced on a coil inside the magnetic portion 432 wherein the voltage is input into a controller 130 as a pulse form when several vanes (blades) passes near the magnetic portion 432 due to a rotation of the impeller 433. At this time, the controller 130 receives the pulse signal to detect a rotation velocity of the impeller 433.

As the flow passing through the fluid path becomes greater, the collision energy to be transmitted to the impeller 433 further increases to accelerate the rotation velocity of the impeller 433 and thus the flow passing through the fluid path can be directly measured through the rotation velocity of the impeller 433.

Further, as shown in FIG. 5, the actuator 450 is provided to adjust an opening amount of the sheet 413 wherein the flow passing by the sheet 413 is adjusted by the actuator 450 and when the flow passing by the sheet 413 is adjusted, a total flow passing through the water returning tube 7 is eventually adjusted.

The actuator 450 is provided on one side of the body 410 to adjust the opening amount of the sheet 413 depending on electric signals.

Accordingly, the flow sensor 430 directly measures a flow passing inside the fluid path and sends the measured information to the controller 130, and then the controller 130 controls the actuator 450 by the information from the flow sensor 430 to adjust a flow sectional area in the sheet 413, thereby allowing a constant flow to be always flowed.

The actuators 250, 350, 450 used in the first, second and third embodiments of the present invention mainly includes a driving main body 251, 351, 451 and a moving rod 252, 352, 452 wherein the driving main body 251, 351, 451 is connected electrically to the controller 130, which will be described later, and receives electric signals from the controller 130 and converts them into kinetic force.

The kinetic force of the driving main body 251, 351, 451 is transmitted to the moving rod 252, 352, 452 and an opening amount of the sheet 213, 313, 413 is adjusted by length variation due to a movement of the moving rod 252, 352, 452. The driving main body will be described later.

Meanwhile, as shown in FIGS. 7 and 8, a variable flow valve 500 according to the fourth embodiment mainly includes a body 510, a chamber 520, a diaphragm 530 and an actuator 550.

Herein, an entrance 511 through which returning fluid is input is formed on inner one side of the body 510 and an exit 512 through which the returning fluid is discharged is formed on the other side thereof wherein a fluid path through which the entrance 511 and the exit 512 are communicated is provided inside the body 510.

The chamber 520 is a predetermined space formed on one inner side of the body 510 wherein the chamber is partitioned by an upper and lower cylindrical support rods 521, 522 provided inside the body 510 and is communicated with the entrance 511 and the exit 522 of the body. The upper and lower support rods 521, 522 are cylindrical elements and may be provided inside the body 510, or extended from the body as a part of the body.

The chamber 520 is partitioned by a diaphragm 530 installed on a lower part of the body 510 into a first hydraulic pressure chamber 524 and a second hydraulic pressure chamber 525 wherein a hydraulic pressure at a side of the entrance 511 applies to the first hydraulic pressure chamber 524 through a hydraulic pressure path 523 connected to the entrance 511 of the body 510 and an hydraulic pressure in the second hydraulic pressure chamber 525 is varied with increasing and decreasing of a sectional area passing toward the exit 512 by a deformation of the diaphragm 530.

One end of the diaphragm 530 is fixed to the lower support rod 522 of the chamber 520 and the other end thereof is fixed to a slider 540 connected to a resilient member 543 which is installed within the chamber 520. As a result, the chamber 520 is partitioned into the first hydraulic pressure chamber 524 to be communicated with the entrance 511 of the body 510 and the second hydraulic pressure chamber 525 to be communicated with the exit 512 of the body 510.

In more detailed description of installing the diaphragm 530, one end of the diaphragm 530 is installed on the lower support rod 522 of the chamber 520 and fixed thereto not to be moved even in case of hydraulic pressure of the first hydraulic pressure chamber 524 and the second hydraulic pressure chamber 525 being varied. Meanwhile, the other end of the diaphragm 530 is fixed to the slider 540 and the slider 540 is fitted into a guide protrusion 513 protruded from a floor of the chamber 520 and moved vertically due to hydraulic pressure variation of the first hydraulic pressure chamber 524 and the second hydraulic pressure chamber 525.

A resilient member 545 such as coil spring is fitted between the guide protrusion 513 and a moving rod 522, which will be described later. Here, fitting stumbles 514, 554 are formed on the upper end of the guide protrusion 513 and a lower end of the moving rod 552, respectively, to prevent the resilient member 545 being separated.

The resilient member 545 is installed to be elastically biased when the slider 540 is moved along the guide protrusion 513 due to the hydraulic pressure variation of the first hydraulic pressure chamber 524 and the second hydraulic pressure chamber 525. When the first hydraulic pressure chamber 524 and the second hydraulic pressure chamber 525 are under a same pressure, the resilient member 545 allows the slider 540 to be returned to an initial location, as indicated by a solid line in FIG. 7.

While a fluid of a predetermined hydraulic pressure is flowing into the body 510, in case where a fluid of higher hydraulic pressure flows at a predetermined moment into the body, the hydraulic pressure at a side of the entrance 511 becomes higher than that of the exit 512 and thus a pressure $P_1$ of the first hydraulic pressure chamber 524 to be communicated with the entrance 511 becomes higher than the pressure $P_2$ of the second hydraulic pressure chamber 525 to be communicated with the exit 512. Due to this pressure difference, the pressure of the first hydraulic pressure chamber 524 applies toward the second hydraulic pressure chamber 525 and, as indicated with a dotted line in FIG. 7, thus the slider 540 connected to the diaphragm 530 rises toward the second hydraulic pressure chamber 525 and at the same time the diaphragm 530 itself is deformed to swell toward the second hydraulic pressure chamber 525. As a result, a sectional area $d_2$ of a path in communication between the second hydraulic chamber 525 and the exit 512 is reduced.

When the sectional area $d_2$ passing from the second hydraulic pressure chamber 525 toward the exit 512 is reduced, the hydraulic pressure of the second hydraulic pressure chamber 525 increases gradually to eventually be equal to the hydraulic pressure of the first hydraulic pressure chamber 524, and when the pressure of the first hydraulic pressure chamber 524 and the second hydraulic pressure chamber 525 are in equilibrium state ($p_1=p_2$), the slider 524 is returned to an initial location by the resilient member 545.

Likewise, the chamber 520, the diaphragm 530 and the slider 540 are configured for the hydraulic pressure at the sides of the entrance 511 and the exit 512 to be always equal. Here, the reason for maintaining the pressures to be equal is that a sectional area of a flow passing from the entrance 511 toward the exit 512 is adjusted to control precisely the flow as a desired flow through the equal pressure at the sides of the entrance 511 and the exit 512.

Meanwhile, while maintaining the equal hydraulic pressure at the sides of the entrance 511 and the exit 512 through the configuration as set forth above, a flow passing through the chamber 520 is controlled by an actuator 550.

The actuator 550 may be provided on upper part of the body 510 to actually adjust a flow by adjusting a sectional area passing from the entrance 511 toward the chamber 520 according to an electrical signal wherein the actuator 550 actually controls the flow by actually adjusting a sectional area $d_1$ passing from the entrance 511 of the body 510 toward the chamber 520.

The actuator 550 mainly includes a driving main body 551, a moving rod 552 and a flow blocking body 555 wherein the driving main body 551 is connected electrically to a controller 130, which will be described later, and receives an electric signal from the controller 130 and converts it into a kinetic force. The driving main body 551 will be described later.

The moving rod 552 and the flow blocking body 555 in the actuator 550 are operated in two kinds of way, each of which will be described simply, referring to FIGS. 7 and 8.

As shown in FIG. 7, the actuator includes the moving rod (552) which is provided rotatively to the driving main body 551 and on a lower end of which a plurality of screw threads 553 are formed, and the flow blocking body 555 which is connected to the screw thread 553 of the moving rod 552 and is moved vertically along the upper support rod 521 of the chamber 520 when the moving rod 552 is rotated, and adjusts the sectional area $d_1$ passing from the entrance 511 toward the chamber 520.

According to this configuration, the moving rod 552 is only rotated to both directions at its place and the flow blocking body 555 moves vertically along the screw thread of the moving rod 552 to adjust the sectional area. At this time, since the moving rod 552 is not moved vertically, the resilient member 545 fitted into a lower end of the moving rod is not biased.

Further, as shown in FIG. 8, the actuator includes the moving rod 552 which is provided reciprocally movable to the driving main body 551 and on a lower end of which a plurality of screw threads 553 are formed, and the flow blocking body 555 which is connected to the screw thread 553 of the moving rod 552 and is moved vertically along the upper support rod 521 of the chamber 520 when the moving rod 552 is reciprocated straightly, and adjusts the sectional area d1 passing from the entrance 511 of the body 510 toward the chamber 520.

According to this configuration, as the moving rod is reciprocated vertically and straightly, the resilient member 545 fitted into a lower end thereof is elastically biased to vary uniformly and smoothly a sectional area.

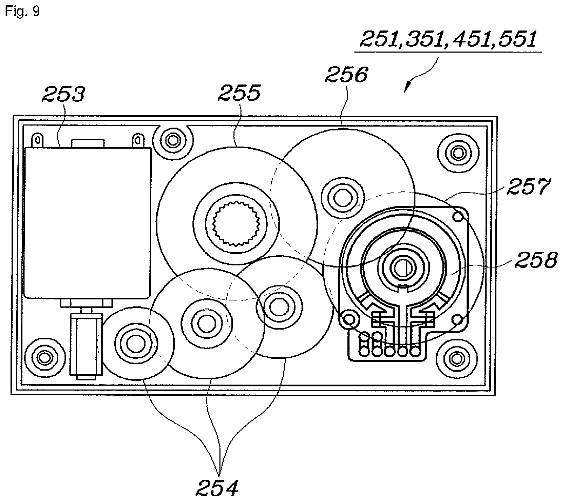

The driving main body 251, 351, 451, 551 used in the first to fourth embodiment of the present invention is configured as shown in FIG. 9 wherein the controller 130 is connected electrically to a driving motor 253 of the driving main body 251, 351, 451, 551 to operate the driving motor 253 wherein the driving motor 253 applies a rotation force to a driving gear 255 through a reduction gear 254.

The driving gear 255, which is not shown in FIG. 9, is connected to the moving rod 252, 352, 452, 552 such that the driving gear transmits power to the moving rod and provides external force for allowing the moving rod 252, 352, 452, 552 to be moved straightly.

At this time, since the controller senses the flow passing through the sheet 213, 313, 413, 513, on the condition that the controller receives location information of the straightly moved moving rod 252, 352, 452, 552, the driving gear 255 is connected to the sensor gear 257 through the connection gear 256.

Accordingly, when the driving gear 255 is rotated, the sensor gear 257 is linked-rotated wherein a known variable resistor 258 is embedded in the sensor gear 257 and out value from the variable resistor 258 is input to the controller 130, and thus the controller 130 receives in real time the output value from the variable resistor 258 and detects a rotation amount of the driving gear 255, that is, the location of the moving rod 252, 352, 452, 552.

The driving gear 255 may be rotated at least one time and the rotation number of sensor gear 257 is limited to less than one time since the sensor gear 257 is in contact with the variable resistor 258 when rotating. Accordingly, a proper gear ratio between the driving gear 255 and the sensor gear 257 may be set in consideration of the rotation range. For reference, in the present invention, a rotation angle of the sensor gear 257 is limited to less than 270 degree and the variable resistor 258 is installed within the rotation angle range. Here, the flow is estimated by the controller 130 when a moving distance of the moving rod 252, 352, 452, 552 is informed since various parameters such as the moving distance of the moving rod 252, 352, 452, 552 and a diameter of the sheet 213 are input into the controller 130.

Likewise, while the moving rod 252, 352, 452, 552 is extended from the driving main body 251, 351, 451, 551 to be inserted into the body 210, 310, 410, 510, the moving rod 252, 352, 452, 552 receives force from the driving main body 251, 351, 451, 551 to adjust a sectional area entering toward the sheet 213, 313, 413, 513 wherein a flow is controlled as the moving rod 252, 352, 452, 552 adjusts a sectional area of the sheet 213, 313, 413, 513.

At this time, an outer diameter of the moving rod 252, 352, 452, 552 may be corresponded to an inner diameter of the moving rod 252, 352, 452, 552 wherein when the moving rod 252, 352, 452, 552 is fitted completely into the sheet 213, 313, 413, 513, the fluid cannot flow and thus passing flow becomes "0".

Meanwhile, the controller 130 is configured in such a manner that, as shown in FIG. 2, the controller receives signal from the temperature adjusting portion 110 to control the driver 120 and the variable flow valve according to the signal.

Since a desired temperature by a user is to be set in the temperature adjusting portion 110 and current indoor temperature is measured by the temperature adjusting portion, as set forth above, the desired temperature being set to the temperature adjusting portion 110 and the current indoor temperature sensed by the temperature adjusting portion 110 are all input into the controller 130.

The controller 130 compares the input desired temperature and the current temperature and in case where the current temperature is lower than the desired temperature, heating needs and thus an ON signal is given to the driver 120 to allow the corresponding water returning pipe 5 to be opened.

At this time, in case where the desired temperature becomes equal to the current temperature and it is request to stop heating, the controller 130 gives an OFF signal to the driver 120 of the corresponding room to close the water returning pipe 5 of the corresponding room.

At this time, the controller 130 allows that the flow of the variable flow valve 200-500 is reduced and a total constant flow per household passing through the variable flow valve 200-500 is equal to a summation of flow of each room being heated according to a proportion of an optimum flow value of closed rooms to an optimum flow value of a total rooms wherein the optimum flow value is stored in the controller, which is in proportion to a necessary request heat amount necessary for optimum heating the corresponding room in consideration of heating load in each room optimum, as set forth above.

The control signal sent from the controller 130 to the variable flow valve 200-500 is sent to the driving main body 251, 351, 451, 551 among the actuator 250, 350, 450, 550 of the variable flow valve 200-500 to adjust a moving distance of the moving rod 252, 352, 452, 552. Here, the flow according to a moving distance of the moving rod 252, 352, 452, 552 is estimated by the controller 130 to which various parameters such as the moving distance of the moving rod 252, 352, 452, 552 and a diameter of the sheet 213, 313, 413, 513 are input.

If the heating is performed in only one room, the controller 130 opens only the water returning pipe 7 of a room being heated and closes the water returning pipe 7 of the other rooms (heating stopped rooms), and controls to allow the flow equal to the optimum flow value of the room being heated (the flow in consideration of heating load) to be flowed to the variable flow valve 200-500.

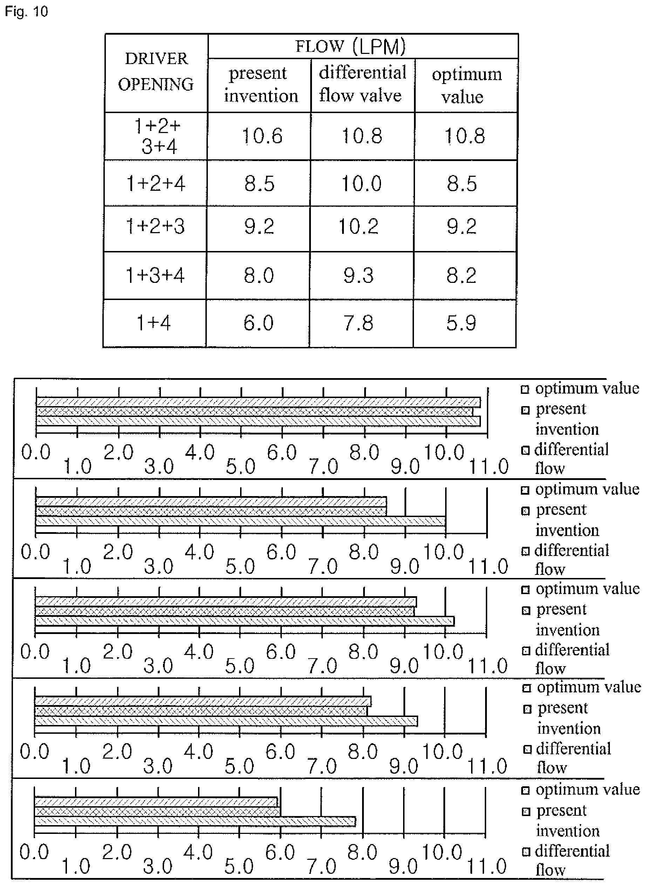

Additional examples will be described below, referring to experimental data of FIGS. 10-12 FIGS. 10-12 are experimental tables of the results which are obtained by comparing the apparatus according to the present invention and a prior difference pressure flow valve with respect to 4 rooms having different flow from each other and which shows reduction differences of a total constant flow of a household, corresponding to the heating-stopped room. Herein, an optimum value is an ideal value of a total constant flow of the corresponding household, which is calculated according to whether heating or non-heating each room.

Further, the driver opening means that the corresponding room is heated, and for example when the driver opening is "1+2+3+4", the rooms 1, 2, 3, and 4 are heating, and further when the driver opening is "1", the room 1 is heating and the rest rooms 2, 3, and 4 are stopped heating.

First, referring to FIG. 10, when the driver opening is in a state of "1+2+3+4", the flows of the present invention and differential pressure valve all similar to the optimum value; however, when the driver opening is in a state of "1+2+4", "1+2+3" and "1+3+4", which means that one room is stopped being heated, the flow of the present invention approaches to the optimum value, the flow of the prior differential pressure valve is different from the optimum value, which shows that flow control has not performed properly.

This result means that in spite of one room not being heated properly the total constant flow of a household is not reduced in proportion thereto, and eventually over flow flows into the other rooms which are being heated not to save fuel cost and further produce cavitation due to fluid velocity increasing.

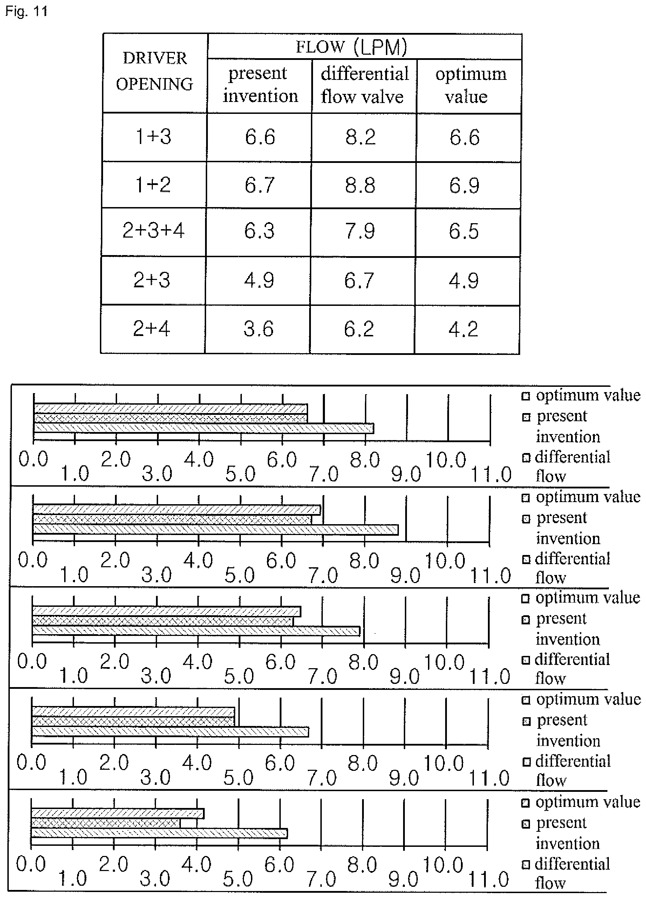

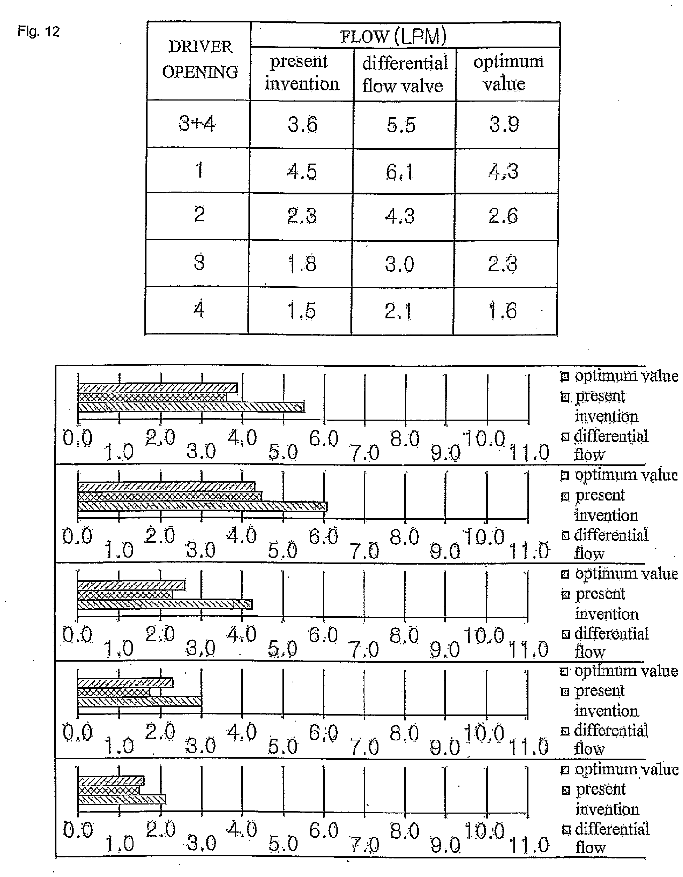

This difference is further deepened as the number of the heating-stopped room is increased, as shown in FIGS. 11 and 12, wherein as shown in FIG. 12, it is shown that in case of one room being heated, the apparatus according to the present invention approaches closely to the optimum value to practically save fuel cost and not to produce noise; however, the prior differential pressure flow valve is different greatly from the optimum value to decrease heating efficiency and produce noise due to cavitation.

Meanwhile, the control methods of "open valve number rate" and "open valve length rate" among the heating device, which is described in the prior art, comparing to the apparatus according to the present invention, are applied to same household for the optimum flow and actual control flow to be reviewed.

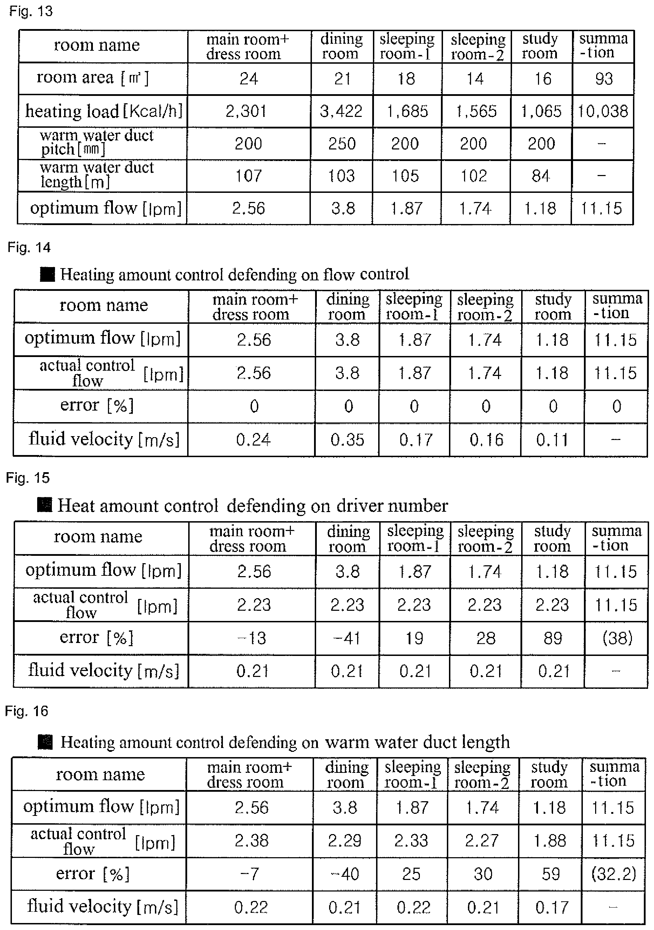

The parameters of "Korea Koyang shi hangshindong shin donga apartment 48 pyung type (hereinafter, referred to as "construction example") are shown in FIG. 13. As shown in FIG. 13, even though an area of "dining room" is smaller than that of "main room + dress room" in the construction example, the dining room which has generally a large window and the numbers of the window is many and thus the heating load is large due to much heat loss to increase the optimum flow.

As shown in FIG. 14, it is shown that the apparatus according to the present invention is installed to the construction example to control a real flow and then error is 0% per room. This is caused from the fact that a total constant flow is initially controlled based on the optimum flow value per room so that the total constant flow is controlled by the amount of the optimum constant flow of the heating-stopped room and thus the design criteria is met to improve a heating efficiency for performing optimum heating and reduce cavitation.

However, in FIG. 15, the data of a constant flow, which is controlled by the method of "open valve number rate", is shown wherein the constant flow is controlled by the driver number, without consideration at all of a room area or a heating load, and thus the actual controlled flow shows an equal value per room.

This result is not relevant to the optimum flow value request by the corresponding room and thus over-heating or lower-heating is caused to decrease a heating satisfaction and produce cavitation in the over-heating room.

Further, in FIG. 16, the data of a constant flow which is controlled by a prior method of "open valve length rate" is shown wherein the constant flow is controlled by considering the room area and thus the error is decreased a little bit, comparing the results shown in FIG. 15; however, still over-heating or lower-heating is occurred not to maintain the optimum heating.

Hereinafter, 『whether a temperature variation ΔT of the regional heating design criteria is satisfied』 based on the control methods of "open valve number rate" and "open valve length rate", comparing to the present invention, will be described.

As shown in FIG. 13, in case where a dining room only is heated, a heating load of a dining room is 3,422 [kcal/h], and this value means the necessary request heat amount for the dining room wherein referring to FIG. 14, an actual control flow is 3.8[lpm], and is multiplied by 60 to convert time concept to calculate ΔT, and then ΔT is as followings.

$$3,422 = (3.8 \times 60) \times 1 \times \Delta T$$

$$\Delta T = 15(°C)$$

However, as shown in FIG. 15, when the flow is controlled by the "open valve number rate" method, the actual control flow of a dining room is 2.23[lpm], and at this time $\Delta T$ is as followings.

$$3,422 = (2.23 \times 60) \times 1 \times \Delta T$$

$$\Delta T = about \ 26(°C)$$

Accordingly, a controlling of the flow according to "open valve number rate" method does not satisfy the temperature variation 15°C, which is shown in the regional heating design criteria. Further, in case of the actual control flow being smaller than optimum flow value, the water returning temperature is 34°C, which is remarkably lower than 45°C shown in the regional heating design criteria, and as a result, a room temperature is not uniform though a whole room and a deviation between entrance side and exit side of the warm water is great to cause an heat unbalance.

Meanwhile, a case of an actual control flow being greater than the optimum flow when the flow is controlled according to "open valve length rate" control method is given as an example.

Referring to FIGS. 13 and 16, a heating load of a study room is 1,065[kcal/h], and as a result the optimum flow is 1.18; however, the actual flow is 1.88. At this time the temperature variation ($\Delta T$) is as followings.

$$1,065 = (1.88 \times 60) \times 1 \times \Delta T$$

$$\Delta T = about \ 9.4 \ (°C)$$

Accordingly, when flow is flowed over the optimum flow, the regional heating design criteria is not satisfied and as well enough heat exchanging with room is not made to decrease heating efficiency, thereby to increase heating cost.

While the invention has been shown and described with reference to exemplary embodiments thereof, it will be understood by those skilled in the art that various changes in form and details may be made therein without departing from the invention as defined by the appended claims. Therefore, the scope of the invention is defined not by the detailed description of the invention but by the appended claims, and all differences within the scope will be construed as being included in the present invention.

**Claims**

1. An apparatus for automatically controlling a constant flow by considering heating load, comprising:

   a supply tube (2) through which warm water is supplied to each household;
   warm water ducts (4) which are communicated with the supply tube (2) and are branched to each room respectively, and allow the latent heat of the warm water to be heat-exchanged with the corresponding room;
   water returning pipes (5) which are communicated with the warm water ducts (4) respectively and to which the heat exchanged warm water is returned;
   a water returning tube (7) to which flows of the water returning pipes (5) are collected and through which the collected flows are discharged outside;
   temperature adjusting portions (110) which are installed in each room to set desired temperatures for the rooms and measure an indoor temperature of each room;
   drivers (120) which are installed respectively in the water returning pipes (5) and each of the drivers (120) opens and closes a passage of the corresponding water returning pipe (5) according to an electrical signal;
   a variable flow valve (200,300,400,500) which is installed in the supply tube (2) or the water returning tube (7) and varies the flow of the supply tube (2) or the water returning tube (7) according to another electrical signal; and
   a controller (130) which receives the signal from the temperature adjusting portion (110) of each room and controls both the driver (120) of each respective room and the variable flow valve (200, 300, 400, 500), wherein the controller (130) stores an optimum flow value for each room determined on the basis of the necessary request heat amount of the corresponding room in consideration of heating load per room,

wherein, in response to a signal from the temperature adjusting portion (110) of a room where heating has to be stopped, the controller (130) controls the corresponding driver (120) in order to close the passage of the water returning pipe (5) of the corresponding room,

whereby the flow through the variable flow valve (200, 300, 400, 500) is reduced in proportion to the ratio of the stored optimum flow value of the closed room to a summation of the stored optimum flow values of all the rooms.

2. The apparatus for automatically controlling a constant flow by considering heating load of claim 1, wherein the heating load to be stored in the controller is obtained by summating all face load amount on the respective face forming the room wherein the face load amount is obtained by multiplying at least one factors among heat transmission rate, area, azimuth coefficient, and relevant temperature difference.

3. The apparatus for automatically controlling a constant flow by considering heating load of claim 1, wherein the variable flow valve (200) comprises:

a body (210) in which a fluid path through which an entrance (211) and an exit (212) are communicated is provided and in which a sheet (213) is formed between the entrance (211) and the exit (212) with decreasing a sectional area of the fluid path;
a chamber (220) in which a hydraulic pressure passage is formed in one inner side of the body (210), which is applied by the entrance (211) side hydraulic pressure and the exit (212) side hydraulic pressure;
a diaphragm (230) which partitions the chamber (220) and is applied both sides by the entrance (211) side hydraulic pressure and the exit (212) side hydraulic pressure, and is deformed by the pressure difference of the entrance and the exit;
a moving body 240 which is connected to one side of the diaphragm (230) and is resiliently installed to adjust a sectional area passing from the sheet (213) toward the exit (212) by the pressure difference in the chamber (220);and
an actuator (250) which adjusts on the other side of the body (210) an opening amount of the sheet (213) by a control signal from the controller (130).

4. The apparatus for automatically controlling a constant flow by considering heating load of claim 3, wherein the moving body (240) comprises:

a head portion (241) which is connected to the diaphragm (230) ;
a stem portion (242) which is extended from the head portion (241) toward the sheet (213) and adjusts a sectional area of a flow passing from the sheet (213) toward the exit (212); and
a resilient member (243) which is installed between the moving body (240) and the chamber (220) so that the moving body (240) is returned when both side pressures are equal based on the diaphragm (230).

5. The apparatus for automatically controlling a constant flow by considering heating load of claim 1, wherein the variable flow valve (300) comprises:

a body (310) in which a fluid path through which an entrance (311) and an exit (312) are communicated is provided and in which a sheet (313) is formed between the entrance (311) and the exit (312) with decreasing a sectional area of the fluid path;
a chamber (320) in which a hydraulic pressure passage is formed in one inner side of the body (310), which is applied by the entrance (311) side hydraulic pressure and the exit (312) side hydraulic pressure;
a diaphragm (330) which partitions the chamber (320) and is applied both sides by the entrance (311) side hydraulic pressure and the exit (312) side hydraulic pressure, and is deformed by the pressure difference of the entrance and the exit;
a moving body 340 which is connected to the diaphragm (230) and moves to reduce a flow sectional area of an inflection portion (314) passing from the entrance (311) side toward the sheet (313) side when a pressure in the sheet (313) side is greater than that in the exit (312) side; and
an actuator (350) which adjusts an opening amount of the sheet (313) by a control signal from the controller (130).

6. The apparatus for automatically controlling a constant flow by considering heating load of claim 5, wherein an outer peripheral surface of the diaphragm (330) is fixed to an inner wall of the chamber (320) and on an inner peripheral surface of the diaphragm a through portion (331) to which the moving body (340) is connected is formed.

7. The apparatus for automatically controlling a constant flow by considering heating load of claim 6, wherein the moving body (340) comprises:

   a head portion (341) which is fitted into the through portion (331) of the diaphragm (330);
   a stem portion (342) which is extended from the head portion (341) to the inflection portion (314) through which the entrance (311) side and the sheet (313) side are communicated to adjust a sectional area of a flow passing through the inflection portion (314) according to a deformation of the diaphragm (330); and
   a resilient member (343) which is installed on the moving body (340) so that the moving body (340) is returned when both side pressures are equal based on the diaphragm (330) .

8. The apparatus for automatically controlling a constant flow by considering heating load of claim 7, wherein a adjusting screw (315) is provided in the inflection portion (314) to adjust initially passing flow by adjusting an interval from the step portion (342).

9. The apparatus for automatically controlling a constant flow by considering heating load of claim 1, wherein the variable flow valve (400) comprises:

   a body (410) in which a fluid path through which an entrance (411) and an exit (412) are communicated is provided and in which a sheet (413) is formed between the entrance (411) and the exit (412) with decreasing a sectional area of the fluid path;
   a flow sensor (430) which is installed on the fluid path and measures a flow of a fluid passing the fluid path; and
   an actuator (450) which adjusts an opening amount of the sheet (413) by a control signal from the controller (130).

10. The apparatus for automatically controlling a constant flow by considering heating load of claim 9, wherein the flow sensor (430) comprises:

    a housing which is installed on the fluid path and inside which a through hole (431a) is formed;
    a magnetic portion (432) which is installed in a predetermined space along a circumferential direction of the through hole (431a); and
    an impeller (433) which is installed rotatively in the through hole (431a) wherein when a rotation velocity of the impeller (433) is varied according to the flow passing through the fluid path, the magnetic portion (432) detects the rotation velocity to transmit it to the controller (130).

11. The apparatus for automatically controlling a constant flow by considering heating load of any one of claims 3, 5 and 9, wherein the actuators (250, 350, 450) comprise:

    a driving main body (251, 351, 451) which is connected electrically to the controller (130) and converts the electric signal from the controller (130) into kinetic force; and
    a moving rod (252, 352, 452) which is extended from the driving main body (251, 351, 451) to be inserted into the body (210, 310, 410) and moves toward the sheet to adjust an opening amount of the sheet (213, 313, 413).

12. The apparatus for automatically controlling a constant flow by considering heating load of claim 11, wherein the driving main bodies (251, 351, 451) comprise:

    a driving motor (253) which is connected electrically to the controller (130) to produce a driving force;
    a driving gear (255) which transmits the driving force produced from the driving motor (253) to the moving rod (252, 352, 452); and
    a variable resistor (258) which is link-moved with the driving gear (255) to sense a displacement amount of the moving rod (252, 352, 452) and feedbacks the sensed displacement amount to the controller (130).

13. The apparatus for automatically controlling a constant flow by considering heating load of claim 1, wherein the variable flow valve (500) comprises:

    a body (510) inside which a fluid path through which the entrance (511) and the exit (512) are communicated is provided;
    a chamber (520) which is partitioned inside the body (510) by the upper and lower support rods (521, 522) and is communicated with the entrance 511 and the exit (512) of the body;

a diaphragm (530) one end of which is fixed to the lower support rod (522) of the chamber (520) and the other end of which is fixed to a slider (540) connected to the resilient member (545) provided inside the chamber (520), and which partitions the chamber (520) into a first hydraulic pressure chamber (524) to be communicated with the entrance (511) of the body (510) and a second hydraulic pressure chamber (525) to be communicated with the exit (512) of the body (510); and

an actuator (550) which is installed movably along the upper support rod (521) of the chamber (520) and adjusts a sectional area passing from the entrance (511) of the body (510) toward the chamber (520) by a control signal from the controller (130).

14. The apparatus for automatically controlling a constant flow by considering heating load of claim 13, wherein the resilient member (545) is fitted between a guide protrusion (513) to which the slider (540) is mounted movably and the moving rod (552) and is elastically biased by the slider (540) when the diaphragm (530) is deformed by a pressure difference between the first hydraulic pressure chamber (524) and the second hydraulic pressure chamber (525).

15. The apparatus for automatically controlling a constant flow by considering heating load of claim 13, wherein the actuator (550) comprises:

a driving main body (551) which is connected electrically to the controller (130) and converts an electric signal from the controller (130) into a kinetic force;

a moving rod (552) which is moved reciprocally on the driving main body (551) and a lower end of which a plurality of screw threads (553) are formed; and

a flow blocking body (555) which is connected to the screw thread (553) of the moving rod (552) and is moved vertically along the upper support rod (521) when the moving rod (522) is rotated, thereby to adjust a sectional area passing from the entrance (511) of the body (510) toward the chamber (520).

16. The apparatus for automatically controlling a constant flow by considering heating load of claim 13, wherein the actuator (550) comprises:

a driving main body (551) which is connected electrically to the controller (130) and converts an electric signal from the controller (130) into a kinetic force;

a moving rod (552) which is installed rotatively on the driving main body (551) and a lower end of which a plurality of screw threads (553) are formed; and

a flow blocking body (555) which is connected to the screw thread (553) of the moving rod (552) and is moved vertically along the upper support rod (521) when the moving rod (522) is moved reciprocally, thereby to adjust a sectional area passing from the entrance (511) of the body (510) toward the chamber (520).

17. The apparatus for automatically controlling a constant flow by considering heating load of claim 15 or 16, wherein the driving main body (551) comprises:

a driving motor (253) which is connected electrically to the controller (130) to produce a driving force;

a driving gear (255) which transmits the driving force produced from the driving motor (253) to the moving rod (552); and

a variable resistor (258) which is link-moved with the driving gear (255) to sense a displacement amount of the moving rod (552) and feedbacks the sensed displacement amount to the controller (130).

**Patentansprüche**

1. Vorrichtung zur automatischen Regelung eines konstanten Flusses unter Berücksichtigung einer Heizlast, umfassend:

ein Vorlaufrohr (2), durch das jedem Haushalt Warmwasser zugeführt wird;

Warmwasserleitungen (4), die mit dem Vorlaufrohr (2) in Verbindung stehen und jeweils zu jedem Raum abzweigen und es ermöglichen, dass die latente Wärme des Warmwassers mit dem entsprechenden Raum wärmegetauscht wird;

Wasserrückleitungen (5), die jeweils mit den Warmwasserleitungen (4) in Verbindung stehen und an welche das wärmeausgetauschte Wasser zurückgeführt wird;

ein Wasserrücklaufrohr (7), in dem Flüsse der Wasserrückleitungen (5) gesammelt werden und durch das die gesammelten Flüsse nach außen abgeführt werden;

Temperatureinstellabschnitte (110), die in jedem Raum zum Einstellen gewünschter Temperaturen für die Räume und Messen einer Innentemperatur jedes Raumes installiert sind;

Antriebselemente (120), die jeweils in den Wasserrückleitungen (5) installiert sind, wobei jedes der Antriebselemente (120) einen Durchlass der entsprechenden Wasserrückleitung (5) gemäß einem elektrischen Signal öffnet und schließt;

ein Flussregelventil (200, 300, 400, 500), das in dem Vorlaufrohr (2) oder dem Wasserrücklaufrohr (7) installiert ist und den Fluss durch das Vorlaufrohr (2) oder das Wasserrücklaufrohr (7) gemäß einem anderen elektrischen Signal variiert; und

eine Regelung (130), welche das Signal von dem Temperatureinstellabschnitt (110) jedes Raumes empfängt und sowohl das Antriebselement (120) jedes jeweiligen Raumes als auch das Flussregelventil (200, 300, 400, 500) regelt;

wobei die Regelung (130) einen optimalen Flusswert für jeden Raum speichert, der auf Grundlage der nötigen Anforderungswärmemenge des entsprechenden Raumes unter Berücksichtigung der Heizlast je Raum bestimmt wird,

wobei in Reaktion auf ein Signal von dem Temperatureinstellabschnitt (110) eines Raumes, in dem mit Heizen aufgehört werden soll, die Regelung (130) das entsprechende Antriebselement (120) regelt, um den Durchlass der Wasserrückleitung (5) des entsprechenden Raumes zu schließen,

wodurch der Fluss durch das Flussregelventil (200, 300, 400, 500) proportional zu dem Verhältnis des gespeicherten optimalen Flusswerts des geschlossenen Raumes zu einer Summe der gespeicherten optimalen Flusswerte aller Räume verringert wird.

2. Vorrichtung zur automatischen Regelung eines konstanten Flusses unter Berücksichtigung einer Heizlast nach Anspruch 1, wobei die in der Regelung zu speichernde Heizlast durch Addieren der gesamten Flächenlastmenge auf die jeweilige den Raum bildende Fläche erhalten wird, wobei die Flächenlastmenge durch Multiplizieren wenigstens eines Faktors aus Wärmeübertragungsgeschwindigkeit, Flächeninhalt, Azimutkoeffizient und einem jeweiligen Temperaturunterschied erhalten wird.

3. Vorrichtung zur automatischen Regelung eines konstanten Flusses unter Berücksichtigung einer Heizlast nach Anspruch 1, wobei das Flussregelventil (200) umfasst:

einen Körper (210), in dem ein Fluidweg, über den ein Einlass (211) und ein Auslass (212) in Verbindung stehen, bereitgestellt ist und in dem eine Platte (213) zwischen dem Einlass (211) und dem Auslass (212) mit Abnehmen einer Schnittfläche des Fluidwegs ausgebildet ist;

eine Kammer (220), in der ein Hydraulikdruckdurchlass in einer Innenseite des Körpers (210) ausgebildet ist, auf den ein Hydraulikdruck auf der Seite des Einlasses (211) und ein Hydraulikdruck auf der Seite des Auslasses (212) ausgeübt wird;

eine Membran (230), welche die Kammer (220) teilt und auf die auf beiden Seiten der Hydraulikdruck auf der Seite des Einlasses (211) und der Hydraulikdruck auf der Seite des Auslasses (212) ausgeübt wird und die sich durch den Druckunterschied des Einlasses und des Auslasses verformt;

einen beweglichen Körper (240), der mit einer Seite der Membran (230) verbunden ist und elastisch installiert ist, um eine Schnittfläche, die von der Platte (213) hin zum Auslass (212) verläuft, durch die Druckdifferenz in der Kammer (220) einzustellen; und

ein Stellglied (250), das auf der anderen Seite des Körpers (210) einen Öffnungsgrad der Platte (213) durch ein Regelungssignal von der Regelung (130) einstellt.

4. Vorrichtung zur automatischen Regelung eines konstanten Flusses unter Berücksichtigung einer Heizlast nach Anspruch 3, wobei der bewegliche Körper (240) umfasst:

einen Kopfabschnitt (241), der mit der Membran (230) verbunden ist;

einen Schaftabschnitt (242), der sich von dem Kopfabschnitt (241) hin zur Platte (213) erstreckt und eine Schnittfläche eines von der Platte (213) hin zum Auslass (212) strömenden Flusses einstellt; und

ein elastisches Element (243), das zwischen dem beweglichen Körper (240) und der Kammer (220) so installiert ist, dass der bewegliche Körper (240) zurückgeführt wird, wenn beide Seitendrücke auf Grundlage der Membran (230) gleich sind.

5. Vorrichtung zur automatischen Regelung eines konstanten Flusses unter Berücksichtigung einer Heizlast nach Anspruch 1, wobei das Flussregelventil (300) umfasst:

einen Körper (310), in dem ein Fluidweg, über den ein Einlass (311) und ein Auslass (312) in Verbindung stehen, bereitgestellt ist und in dem eine Platte (313) zwischen dem Einlass (311) und dem Auslass (312) mit Abnehmen einer Schnittfläche des Fluidwegs ausgebildet ist;

eine Kammer (320), in der ein Hydraulikdruckdurchlass in einer Innenseite des Körpers (310) ausgebildet ist, auf den ein Hydraulikdruck auf der Seite des Einlasses (311) und ein Hydraulikdruck auf der Seite des Auslasses (312) ausgeübt wird;

eine Membran (330), welche die Kammer (320) teilt und auf die auf beiden Seiten der Hydraulikdruck auf der Seite des Einlasses (311) und der Hydraulikdruck auf der Seite des Auslasses (312) ausgeübt wird und die sich durch den Druckunterschied des Einlasses und des Auslasses verformt;

einen beweglichen Körper (340), der mit der Membran (230) verbunden ist und sich so bewegt, dass er eine Flussschnittfläche eines Biegungsabschnitts (314), der von der Seite des Einlasses (311) hin zur Seite der Platte (313) verläuft, verringert, wenn ein Druck auf der Seite der Platte (313) größer ist als auf der Seite des Auslasses (312); und

ein Stellglied (350), das einen Öffnungsgrad der Platte (313) durch ein Regelungssignal von der Regelung (130) einstellt.

6. Vorrichtung zur automatischen Regelung eines konstanten Flusses unter Berücksichtigung einer Heizlast nach Anspruch 5, wobei eine äußere Umfangsfläche der Membran (330) an einer Innenwand der Kammer (320) befestigt ist und an einer inneren Umfangsfläche der Membran ein Durchgangsabschnitt (331) ausgebildet ist, mit dem der bewegliche Körper (340) verbunden ist.

7. Vorrichtung zur automatischen Regelung eines konstanten Flusses unter Berücksichtigung einer Heizlast nach Anspruch 6, wobei der bewegliche Körper (340) umfasst:

einen Kopfabschnitt (341), der in den Durchgangsabschnitt (331) der Membran (330) eingesetzt ist;

einen Schaftabschnitt (342), der sich von dem Kopfabschnitt (341) zu dem Biegungsabschnitt (314) erstreckt, durch den die Seite des Einlasses (311) und die Seite der Platte (313) in Verbindung stehen, um eine Schnittfläche eines Flusses, der durch den Biegungsabschnitt (314) verläuft, gemäß einer Verformung der Membran (330) einzustellen; und

ein elastisches Element (343), das an dem beweglichen Körper (340) so installiert ist, dass der bewegliche Körper (340) zurückgeführt wird, wenn beide Seitendrücke auf Grundlage der Membran (330) gleich sind.

8. Vorrichtung zur automatischen Regelung eines konstanten Flusses unter Berücksichtigung einer Heizlast nach Anspruch 7, wobei eine Stellschraube (315) in dem Biegungsabschnitt (314) bereitgestellt ist, um einen zunächst durchströmenden Fluss durch Einstellen eines Abstands von dem Stufenabschnitt (342) einzustellen.

9. Vorrichtung zur automatischen Regelung eines konstanten Flusses unter Berücksichtigung einer Heizlast nach Anspruch 1, wobei das Flussregelventil (400) umfasst:

einen Körper (410), in dem ein Fluidweg, über den ein Einlass (411) und ein Auslass (412) in Verbindung stehen, bereitgestellt ist und in dem eine Platte (413) zwischen dem Einlass (411) und dem Auslass (412) mit Abnehmen einer Schnittfläche des Fluidwegs ausgebildet ist;

einen Flusssensor (430), der auf dem Fluidweg installiert ist und einen Fluss eines Fluids, das durch den Fluidweg strömt, misst; und

ein Stellglied (450), das einen Öffnungsgrad der Platte (413) durch ein Regelungssignal von der Regelung (130) einstellt.

10. Vorrichtung zur automatischen Regelung eines konstanten Flusses unter Berücksichtigung einer Heizlast nach Anspruch 9, wobei der Flusssensor (430) umfasst:

ein Gehäuse, das auf dem Fluidweg installiert ist und in dessen Inneren ein Durchgangsloch (431a) ausgebildet ist;

einen magnetischen Abschnitt (432), der in einem vorgegebenen Raum entlang einer Umfangsrichtung des Durchgangslochs (431a) ausgebildet ist; und

ein Flügelrad (433), das drehbar in dem Durchgangsloch (431a) installiert ist, wobei, wenn eine Drehgeschwindigkeit des Flügelrads (433) gemäß dem durch den Fluidweg strömenden Fluss variiert wird, der magnetische Abschnitt (432) die Drehgeschwindigkeit erfasst, um sie an die Regelung (130) zu senden.

11. Vorrichtung zur automatischen Regelung eines konstanten Flusses unter Berücksichtigung einer Heizlast nach einem der Ansprüche 3, 5 und 9, wobei die Stellglieder (250, 350, 450) umfassen:

einen Hauptantriebskörper (251, 351, 451), der elektrisch mit der Regelung (130) verbunden ist und das elektrische Signal von der Regelung (130) in kinetische Kraft umwandelt; und
eine bewegliche Stange (252, 352, 452), die sich von dem Hauptantriebskörper (251, 351, 451) erstreckt, um in den Körper (210, 310, 410) eingeführt zu werden, und sich hin zu der Platte bewegt, um einen Öffnungsgrad der Platte (213, 313, 413) einzustellen.

12. Vorrichtung zur automatischen Regelung eines konstanten Flusses unter Berücksichtigung einer Heizlast nach Anspruch 11, wobei die Hauptantriebskörper (251, 351, 451) umfassen:

einen Antriebsmotor (253), der elektrisch mit der Regelung (130) verbunden ist, um eine Antriebskraft zu erzeugen;
ein Antriebsrad (255), das die vom Antriebsmotor (253) erzeugte Antriebskraft auf die bewegliche Stange (252, 352, 452) überträgt; und
einen Regelwiderstand (258), der sich in Verknüpfung mit dem Antriebsrad (255) bewegt, um einen Verschiebungsgrad der beweglichen Stange (252, 352, 452) zu erfassen, und den gemessenen Verschiebungsgrad an die Regelung (130) zurückgibt.

13. Vorrichtung zur automatischen Regelung eines konstanten Flusses unter Berücksichtigung einer Heizlast nach Anspruch 1, wobei das Flussregelventil (500) umfasst:

einen Körper (510), in dem ein Fluidweg, über den der Einlass (511) und der Auslass (512) in Verbindung stehen, bereitgestellt ist;
eine Kammer (520), die innerhalb des Körpers (510) durch die obere und untere Stützstange (521, 522) geteilt ist und mit dem Einlass (511) und dem Auslass (512) des Körpers in Verbindung steht;
eine Membran (530), deren eines Ende an der unteren Stützstange (522) der Kammer (520) befestigt ist und deren anderes Ende an einem Schieber (540) befestigt ist, der mit dem im Inneren der Kammer (520) bereitgestellten elastischen Element (545) verbunden ist, und welche die Kammer (520) in eine erste Hydraulikdruckkammer (524), die mit dem Einlass (511) des Körpers (510) in Verbindung gebracht werden soll, und eine zweite Hydraulikdruckkammer (525), die mit dem Auslass (512) des Körpers (510) in Verbindung gebracht werden soll, teilt; und
ein Stellglied (550), das beweglich entlang der oberen Stützstange (521) der Kammer (520) installiert ist und eine Schnittfläche, die vom Einlass (511) des Körpers (510) zur Kammer (520) verläuft, durch ein Regelungssignal von der Regelung (130) einstellt.

14. Vorrichtung zur automatischen Regelung eines konstanten Flusses unter Berücksichtigung einer Heizlast nach Anspruch 13, wobei das elastische Element (545) zwischen einem Führungsvorsprung (513), an dem der Schieber (540) beweglich angebracht ist, und der beweglichen Stange (552) installiert ist und von dem Schieber (540) elastisch vorgespannt wird, wenn sich die Membran (530) durch einen Druckunterschied zwischen der ersten Hydraulikdruckkammer (524) und der zweiten Hydraulikdruckkammer (525) verformt.

15. Vorrichtung zur automatischen Regelung eines konstanten Flusses unter Berücksichtigung einer Heizlast nach Anspruch 13, wobei das Stellglied (550) umfasst:

einen Hauptantriebskörper (551), der elektrisch mit der Regelung (130) verbunden ist und ein elektrisches Signal von der Regelung (130) in kinetische Kraft umwandelt;
eine bewegliche Stange (552), die auf dem Hauptantriebskörper (551) hin- und herbewegt wird und an deren einem unteren Ende eine Mehrzahl von Schraubgewinden (553) ausgebildet ist; und
einen Flussblockierungskörper (555), der mit dem Schraubgewinde (553) der beweglichen Stange (552) verbunden ist und vertikal entlang der oberen Stützstange (521) bewegt wird, wenn sich die bewegliche Stange (522) dreht, wodurch eine Schnittfläche, die von dem Einlass (511) des Körpers (510) hin zur Kammer (520) verläuft, eingestellt wird.

16. Vorrichtung zur automatischen Regelung eines konstanten Flusses unter Berücksichtigung einer Heizlast nach Anspruch 13, wobei das Stellglied (550) umfasst:

einen Hauptantriebskörper (551), der elektrisch mit der Regelung (130) verbunden ist und ein elektrisches Signal von der Regelung (130) in kinetische Kraft umwandelt;
eine bewegliche Stange (552), die drehbar an dem Hauptantriebskörper (551) installiert ist und an deren einem unteren Ende eine Mehrzahl von Schraubgewinden (553) ausgebildet ist; und
einen Flussblockierungskörper (555), der mit dem Schraubgewinde (553) der beweglichen Stange (552) verbunden ist und vertikal entlang der oberen Stützstange (521) bewegt wird, wenn sich die bewegliche Stange (522) hin- und herbewegt, wodurch eine Schnittfläche, die von dem Einlass (511) des Körpers (510) hin zur Kammer (520) verläuft, eingestellt wird.

17. Vorrichtung zur automatischen Regelung eines konstanten Flusses unter Berücksichtigung einer Heizlast nach Anspruch 15 oder 16, wobei der Hauptantriebskörper (551) umfasst:

einen Antriebsmotor (253), der elektrisch mit der Regelung (130) verbunden ist, um eine Antriebskraft zu erzeugen;
ein Antriebsrad (255), das die vom Antriebsmotor (253) erzeugte Antriebskraft auf die bewegliche Stange (552) überträgt; und
einen Regelwiderstand (258), der sich in Verknüpfung mit dem Antriebsrad (255) bewegt, um einen Verschiebungsgrad der beweglichen Stange (552) zu erfassen, und den gemessenen Verschiebungsgrad an die Regelung (130) zurückgibt.

## Revendications

1. Appareil de commande automatique d'un flux constant en prenant en considération une charge de chauffage, comprenant :

un tube d'alimentation (2) à travers lequel de l'eau chaude est fournie à chaque ménage ;
des canalisations d'eau chaude (4) qui sont mises en communication avec le tube d'alimentation (2) et sont dérivées vers chaque pièce respectivement, et permettent à la chaleur latente de l'eau chaude de subir un échange de chaleur avec la pièce correspondante ;
des tuyaux de renvoi d'eau (5) qui sont mis en communication avec les canalisations d'eau chaude (4) respectivement et auxquels l'eau ayant subi un échange de chaleur est renvoyée ;
un tube de renvoi d'eau (7) vers lequel des flux des tuyaux de renvoi d'eau (5) sont recueillis et à travers lequel les flux recueillis sont évacués à l'extérieur ;
des portions de réglage de température (110) qui sont installées dans chaque pièce pour fixer des températures souhaitées pour les pièces et mesurer une température intérieure de chaque pièce ;
des dispositifs d'entraînement (120) qui sont installés respectivement dans les tuyaux de renvoi d'eau (5) et chacun des dispositifs d'entraînement (120) ouvre et ferme un passage du tuyau de renvoi d'eau (5) correspondant selon un signal électrique ;
une vanne de flux variable (200, 300, 400, 500) qui est installée dans le tube d'alimentation (2) ou le tube de renvoi d'eau (7) et fait varier le flux du tube d'alimentation (2) ou du tube de renvoi d'eau (7) selon un autre signal électrique ; et
un dispositif de commande (130) qui reçoit le signal en provenance de la portion de réglage de température (110) de chaque pièce et commande à la fois le dispositif d'entraînement (120) de chaque pièce respective et la vanne de flux variable (200, 300, 400, 500),
dans lequel le dispositif de commande (130) stocke une valeur de flux optimal pour chaque pièce déterminée sur la base de la quantité de demande de chaleur nécessaire de la pièce correspondante en considération de la charge de chauffage par pièce,
dans lequel, en réponse à un signal provenant de la portion de réglage de température (110) d'une pièce où le chauffage doit être arrêté, le dispositif de commande (130) commande le dispositif d'entraînement (120) correspondant afin de fermer le passage du tuyau de renvoi d'eau (5) de la pièce correspondante,
moyennant quoi le flux à travers la vanne de flux variable (200, 300, 400, 500) est réduit proportionnellement au rapport entre la valeur de flux optimal stockée de la pièce fermée et une somme des valeurs de flux optimal stockées de toutes les pièces.

2. Appareil de commande automatique d'un flux constant en prenant en considération une charge de chauffage selon la revendication 1, dans lequel la charge de chauffage à stocker dans le dispositif de commande est obtenue en sommant toutes les quantités de charge de face sur la face respective formant la pièce, dans lequel la quantité de charge de face est obtenue en multipliant au moins un facteur parmi un taux de transmission de chaleur, une aire, un coefficient d'azimut, et une différence de température concernée.

3. Appareil de commande automatique d'un flux constant en prenant en considération une charge de chauffage selon la revendication 1, dans lequel la vanne de flux variable (200) comprend :

un corps (210) dans lequel un chemin fluidique à travers lequel une entrée (211) et une sortie (212) sont mises en communication est fourni et dans lequel une feuille (213) est formée entre l'entrée (211) et la sortie (212) avec une section décroissante du chemin fluidique ;

une chambre (220) dans laquelle un passage de pression hydraulique est formé dans un côté intérieur du corps (210), qui est appliqué par la pression hydraulique côté entrée (211) et la pression hydraulique côté sortie (212) ;

un diaphragme (230) qui sépare la chambre (220) et est appliqué des deux côtés par la pression hydraulique côté entrée (211) et la pression hydraulique côté sortie (212), et est déformé par la différence de pression de l'entrée et de la sortie ;

un corps mobile 240 qui est raccordé à un côté du diaphragme (230) et est installé de façon résiliente pour régler une section passant de la feuille (213) vers la sortie (212) par la différence de pression dans la chambre (220) ; et

un actionneur (250) qui règle sur l'autre côté du corps (210) une quantité d'ouverture de la feuille (213) par un signal de commande provenant du dispositif de commande (130).

4. Appareil de commande automatique d'un flux constant en prenant en considération une charge de chauffage selon la revendication 3, dans lequel le corps mobile (240) comprend :

une portion de tête (241) qui est raccordée au diaphragme (230) ;

une portion de tige (242) qui s'étend depuis la portion de tête (241) vers la feuille (213) et règle une section d'un flux passant de la feuille (213) vers la sortie (212) ; et

un élément résilient (243) qui est installé entre le corps mobile (240) et la chambre (220) de sorte que le corps mobile (240) soit renvoyé lorsque les deux pressions de côté sont égales d'après le diaphragme (230).

5. Appareil de commande automatique d'un flux constant en prenant en considération une charge de chauffage selon la revendication 1, dans lequel la vanne de flux variable (300) comprend :

un corps (310) dans lequel un chemin fluidique à travers lequel une entrée (311) et une sortie (312) sont mises en communication est fourni et dans lequel une feuille (313) est formée entre l'entrée (311) et la sortie (312) avec une section décroissante du chemin fluidique ;

une chambre (320) dans laquelle un passage de pression hydraulique est formé dans un côté intérieur du corps (310), qui est appliqué par la pression hydraulique côté entrée (311) et la pression hydraulique côté sortie (312) ;

un diaphragme (330) qui sépare la chambre (320) et est appliqué des deux côtés par la pression hydraulique côté entrée (311) et la pression hydraulique côté sortie (312), et est déformé par la différence de pression de l'entrée et de la sortie ;

un corps mobile (340) qui est raccordé au diaphragme (230) et se déplace pour réduire une section de flux d'une portion d'inflexion (314) passant depuis le côté entrée (311) vers le côté feuille (313) lorsqu'une pression dans le côté feuille (313) est supérieure à celle dans le côté sortie (312) ; et

un actionneur (350) qui règle une quantité d'ouverture de la feuille (313) par un signal de commande provenant du dispositif de commande (130).

6. Appareil de commande automatique d'un flux constant en prenant en considération une charge de chauffage selon la revendication 5, dans lequel une surface périphérique extérieure du diaphragme (330) est fixée à une paroi intérieure de la chambre (320) et sur une surface périphérique intérieure du diaphragme une portion traversante (331) à laquelle est raccordé le corps mobile (340) est formée.

7. Appareil de commande automatique d'un flux constant en prenant en considération une charge de chauffage selon la revendication 6, dans lequel le corps mobile (340) comprend :

une portion de tête (341) qui est ajustée dans la portion traversante (331) du diaphragme (330) ;

une portion de tige (342) qui s'étend depuis la portion de tête (341) vers la portion d'inflexion (314) à travers laquelle le côté entrée (311) et le côté feuille (313) sont mis en communication pour régler une section d'un flux passant à travers la portion d'inflexion (314) selon une déformation du diaphragme (330) ; et

un élément résilient (343) qui est installé sur le corps mobile (340) de sorte que le corps mobile (340) soit renvoyé lorsque les deux pressions de côté sont égales d'après le diaphragme (330).

8.  Appareil de commande automatique d'un flux constant en prenant en considération une charge de chauffage selon la revendication 7, dans lequel une vis de réglage (315) est prévue dans la portion d'inflexion (314) pour régler un flux de passage initial en réglant un intervalle de la portion de tige (342).

9.  Appareil de commande automatique d'un flux constant en prenant en considération une charge de chauffage selon la revendication 1, dans lequel la vanne de flux variable (400) comprend :

un corps (410) dans lequel un chemin de fluide à travers lequel une entrée (411) et une sortie (412) sont mises en communication est prévu et dans lequel une feuille (413) est formée entre l'entrée (411) et la sortie (412) avec une section décroissante du chemin fluidique ;

un capteur de flux (430) qui est installé sur le chemin fluidique et mesure un flux d'un fluide passant dans le chemin fluidique ; et

un actionneur (450) qui règle une quantité d'ouverture de la feuille (413) par un signal de commande provenant du dispositif de commande (130).

10.  Appareil de commande automatique d'un flux constant en prenant en considération une charge de chauffage selon la revendication 9, dans lequel le capteur de flux (430) comprend :

un boîtier qui est installé sur le chemin fluidique et à l'intérieur duquel est formé un trou traversant (431a) ;

une portion magnétique (432) qui est installée dans un espace prédéterminé le long d'une direction circonférentielle du trou traversant (431a) ; et

un rouet (433) qui est installé en rotation dans le trou traversant (431a), dans lequel, lorsqu'une vitesse de rotation du rouet (433) est variée selon le flux passant à travers le chemin fluidique, la portion magnétique (432) détecte la vitesse de rotation pour la transmettre au dispositif de commande (130).

11.  Appareil de commande automatique d'un flux constant en prenant en considération une charge de chauffage selon l'une quelconque des revendications 3, 5 et 9, dans lequel les actionneurs (250, 350, 450) comprennent :

un corps principal d'entraînement (251, 351, 451) qui est raccordé électriquement au dispositif de commande (130) et convertit le signal électrique provenant du dispositif de commande (130) en une force cinétique ; et

une bielle mobile (252, 352, 452) qui s'étend depuis le corps principal d'entraînement (251, 351, 451) pour être insérée dans le corps (210, 310, 410) et se déplace vers la feuille pour régler une quantité d'ouverture de la feuille (213, 313, 413).

12.  Appareil de commande automatique d'un flux constant en prenant en considération une charge de chauffage selon la revendication 11, dans lequel les corps principaux d'entraînement (251, 351, 451) comprennent :

un moteur d'entraînement (253) qui est raccordé électriquement au dispositif de commande (130) pour produire une force d'entraînement ;

un pignon d'entraînement (255) qui transmet la force d'entraînement produite par le moteur d'entraînement (253) à la bielle mobile (252, 352, 452) ; et

un résistor variable (258) qui est déplacé en lien avec le pignon d'entraînement (255) pour détecter une quantité de déplacement de la bielle mobile (252, 352, 452) et fournit en retour la quantité de déplacement détectée au dispositif de commande (130).

13.  Appareil de commande automatique d'un flux constant en prenant en considération une charge de chauffage selon la revendication 1, dans lequel la vanne de flux variable (500) comprend :

un corps (510) à l'intérieur duquel est fourni un chemin fluidique à travers lequel l'entrée (511) et la sortie (512) sont mises en communication ;

une chambre (520) qui est séparée à l'intérieur du corps (510) par les tiges de support supérieure et inférieure (521, 522) et est mise en communication avec l'entrée 511 et la sortie (512) du corps ;

un diaphragme (530) dont une extrémité est fixée à la bielle de support inférieure (522) de la chambre (520) et dont l'autre extrémité est fixée à un coulisseau (540) raccordé à l'élément résilient (545) prévu à l'intérieur de la chambre (520), et qui sépare la chambre (520) en une première chambre de pression hydraulique (524) à mettre en communication avec l'entrée (511) du corps (510) et une seconde chambre de pression hydraulique (525) à mettre en communication avec la sortie (512) du corps (510) ; et

un actionneur (550) qui est installé de façon mobile le long de la bielle de support supérieure (521) de la chambre (520) et règle une section passant depuis l'entrée (511) du corps (510) vers la chambre (520) par un signal de commande provenant du dispositif de commande (130).

**14.** Appareil de commande automatique d'un flux constant en prenant en considération une charge de chauffage selon la revendication 13, dans lequel l'élément résilient (545) est ajusté entre une saillie de guidage (513) sur laquelle le coulisseau (540) est monté de façon mobile et la bielle mobile (552) et est sollicité élastiquement par le coulisseau (540) lorsque le diaphragme (530) est déformé par une différence de pression entre la première chambre de pression hydraulique (524) et la seconde chambre de pression hydraulique (525).

**15.** Appareil de commande automatique d'un flux constant en prenant en considération une charge de chauffage selon la revendication 13, dans lequel l'actionneur (550) comprend :

un corps principal d'entraînement (551) qui est raccordé électriquement au dispositif de commande (130) et convertit un signal électrique provenant du dispositif de commande (130) en une force cinétique ;

une bielle mobile (552) qui est déplacée en va-et-vient sur le corps principal d'entraînement (551) et sur une extrémité inférieure de laquelle est formée une pluralité de filets de vis (553) ; et

un corps de blocage de flux (555) qui est raccordé au filet de vis (553) de la bielle mobile (552) et est déplacé à la verticale le long de la bielle de support supérieure (521) lorsque la bielle mobile (522) est tournée, pour régler ainsi une section passant depuis l'entrée (511) du corps (510) vers la chambre (520).

**16.** Appareil de commande automatique d'un flux constant en prenant en considération une charge de chauffage selon la revendication 13, dans lequel l'actionneur (550) comprend :

un corps principal d'entraînement (551) qui est raccordé électriquement au dispositif de commande (130) et convertit un signal électrique provenant du dispositif de commande (130) en une force cinétique ;

une bielle mobile (552) qui est installée en rotation sur le corps principal d'entraînement (551) et sur une extrémité inférieure de laquelle est formée une pluralité de filets de vis (553) ; et

un corps de blocage de flux (555) qui est raccordé au filet de vis (553) de la bielle mobile (552) et est déplacé à la verticale le long de la bielle de support supérieure (521) lorsque la bielle mobile (522) est déplacée en va-et-vient, pour régler ainsi une section passant depuis l'entrée (511) du corps (510) vers la chambre (520).

**17.** Appareil de commande automatique d'un flux constant en prenant en considération une charge de chauffage selon la revendication 15 ou 16, dans lequel le corps principal d'entraînement (551) comprend :

un moteur d'entraînement (253) qui est raccordé électriquement au dispositif de commande (130) pour produire une force d'entraînement ;

un pignon d'entraînement (255) qui transmet la force d'entraînement produite par le moteur d'entraînement (253) à la bielle mobile (552) ; et

un résistor variable (258) qui est déplacé en lien avec le pignon d'entraînement (255) pour détecter une quantité de déplacement de la bielle mobile (552) et fournit en retour la quantité de déplacement détectée au dispositif de commande (130).

Fig. 1

Fig. 2

Fig. 3

controller 130

Fig. 4

controller — *130*

*351*
*350* *352*

*300*

*321* *313*
*323*
*330*
*324*
*320*

*311*

*321*
*324*

*312*

*323*
*322*

*314*
*315*
*341*
*343*
*342* *340*
*310*
*331*

*330*

30

Fig. 5

Fig. 6

Fig. 7

Fig. 8

Fig. 9

251,351,451,551

256

253

255

257

258

254

Fig. 10

| DRIVER OPENING | FLOW (LPM) | | |
|---|---|---|---|
| | present invention | differential flow valve | optimum value |
| 1+2+3+4 | 10.6 | 10.8 | 10.8 |
| 1+2+4 | 8.5 | 10.0 | 8.5 |
| 1+2+3 | 9.2 | 10.2 | 9.2 |
| 1+3+4 | 8.0 | 9.3 | 8.2 |
| 1+4 | 6.0 | 7.8 | 5.9 |

Fig. 11

| DRIVER OPENING | FLOW (LPM) | | |
|---|---|---|---|
| | present invention | differential flow valve | optimum value |
| 1+3 | 6.6 | 8.2 | 6.6 |
| 1+2 | 6.7 | 8.8 | 6.9 |
| 2+3+4 | 6.3 | 7.9 | 6.5 |
| 2+3 | 4.9 | 6.7 | 4.9 |
| 2+4 | 3.6 | 6.2 | 4.2 |

Fig. 12

| DRIVER OPENING | FLOW (LPM) | | |
|---|---|---|---|
| | present invention | differential flow valve | optimum value |
| 3+4 | 3.6 | 5.5 | 3.9 |
| 1 | 4.5 | 6.1 | 4.3 |
| 2 | 2.3 | 4.3 | 2.6 |
| 3 | 1.8 | 3.0 | 2.3 |
| 4 | 1.5 | 2.1 | 1.6 |

Fig. 13

| room name | main room+ dress room | dining room | sleeping room-1 | sleeping room-2 | study room | summa-tion |
|---|---|---|---|---|---|---|
| room area [m²] | 24 | 21 | 18 | 14 | 16 | 93 |
| heating load [Kcal/h] | 2,301 | 3,422 | 1,685 | 1,565 | 1,065 | 10,038 |
| warm water duct pitch [mm] | 200 | 250 | 200 | 200 | 200 | – |
| warm water duct length [m] | 107 | 103 | 105 | 102 | 84 | – |
| optimum flow [lpm] | 2.56 | 3.8 | 1.87 | 1.74 | 1.18 | 11.15 |

Fig. 14

■ Heating amount control defending on flow control

| room name | main room+ dress room | dining room | sleeping room-1 | sleeping room-2 | study room | summa-tion |
|---|---|---|---|---|---|---|
| optimum flow [lpm] | 2.56 | 3.8 | 1.87 | 1.74 | 1.18 | 11.15 |
| actual control flow [lpm] | 2.56 | 3.8 | 1.87 | 1.74 | 1.18 | 11.15 |
| error [%] | 0 | 0 | 0 | 0 | 0 | 0 |
| fluid velocity [m/s] | 0.24 | 0.35 | 0.17 | 0.16 | 0.11 | – |

Fig. 15

■ Heat amount control defending on driver number

| room name | main room+ dress room | dining room | sleeping room-1 | sleeping room-2 | study room | summa-tion |
|---|---|---|---|---|---|---|
| optimum flow [lpm] | 2.56 | 3.8 | 1.87 | 1.74 | 1.18 | 11.15 |
| actual control flow [lpm] | 2.23 | 2.23 | 2.23 | 2.23 | 2.23 | 11.15 |
| error [%] | −13 | −41 | 19 | 28 | 89 | (38) |
| fluid velocity [m/s] | 0.21 | 0.21 | 0.21 | 0.21 | 0.21 | – |

Fig. 16

■ Heating amount control defending on warm water duct length

| room name | main room+ dress room | dining room | sleeping room-1 | sleeping room-2 | study room | summa-tion |
|---|---|---|---|---|---|---|
| optimum flow [lpm] | 2.56 | 3.8 | 1.87 | 1.74 | 1.18 | 11.15 |
| actual control flow [lpm] | 2.38 | 2.29 | 2.33 | 2.27 | 1.88 | 11.15 |
| error [%] | −7 | −40 | 25 | 30 | 59 | (32.2) |
| fluid velocity [m/s] | 0.22 | 0.21 | 0.22 | 0.21 | 0.17 | – |

**EP 2 426 421 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1862878 A
- KR 371794
- KR 635107